# EUROPEAN PATENT SPECIFICATION

(11) **EP 2 475 911 B1**
(45) Date of publication and mention of the grant of the patent: **06.03.2019**
(21) Application number: 10749480.9
(22) Date of filing: 10.08.2010
(51) Int. Cl.: F16G 11/04, F16L 3/10, F16L 3/11, F16L 33/12, F16L 3/233

(54) **SECURING APPARATUS TO SUPPORT AND SECURE AN ARTICLE**
BEFESTIGUNGSVORRICHTUNG ZUR STÜTZE UND FIXIERUNG EINES ARTIKELS
DISPOSITIF DE FIXATION PERMETTANT DE SUPPORTER ET DE FIXER SOLIDEMENT UN ARTICLE

(30) Priority: 08.09.2009 GB 0915641; 12.11.2009 GB 0919780; 18.06.2010 GB 201010205; 28.07.2010 GB 201012648
(43) Date of publication of application: 18.07.2012
(73) Proprietor: Gripple Limited, Sheffield S4 7UQ (GB)
(72) Inventor: FACEY, Hugh, David, Whirlow Sheffield S11 9PX (GB); CLARKE, Neil, Sheffield S11 7JN (GB); PERRET, Mathias, Henri, Bristol BS30 8DE (GB); BACON, Matthew, Clacton on Sea Essex CO15 5EL (GB)
(86) International application number: PCT/GB2010/001501
(87) International publication number: WO 2011/030082

(56) References cited:
- WO-A1-95/30844
- WO-A1-95/30844
- WO-A1-97/36123
- BE-A1- 900 151
- FR-A- 1 070 185
- FR-A- 1 070 185
- GB-A- 333 752
- US-A- 734 815
- US-A- 734 815
- US-A- 2 390 232
- US-A- 4 510 650
- US-A- 4 878 270
- US-A- 6 058 574
- US-A- 6 058 574
- US-A- 6 070 305
- US-A- 6 070 305
- US-A- 6 070 305
- US-A1- 2005 034 281

## Description

This invention relates to securing apparatus. More particularly, but not exclusively, this invention relates to securing apparatus for securing elongate articles which have a curved profile. Embodiments of the invention relate to securing apparatus for securing substantially cylindrical articles, such as pipes. Embodiments of the invention relate to suspending articles such as pipes.

Securing apparatus for clamping pipes are known. Such apparatus generally comprise opposed clamping members that are secured to each other around a pipe by at least one bolt. Different sized support apparatus are required for different sized pipes.

US4510650A discloses a cable clamp assembly. FR 1070185 A discloses a coupling device for flexible pipes. WO 95/30844 A1 discloses a connector for wires or the like.

According to one aspect of this invention, there is provided a securing apparatus according to the subject matter of independent claim 1.

Further preferred embodiments of the securing apparatus of the invention form the subject matter of the dependent claims 2 to 8.

According to another aspect of this invention, there is provided a method of securing an article according to the subject matter of independent claim 9. Further preferred embodiments of the method of securing an article of the invention form the subject matter of the dependent claims 10 to 12.

Thus, when the support arrangement engages the article, the flexible elongate member can extend around the article from the first cooperating arrangement to the second cooperating arrangement, thereby securing the article in engagement with the support arrangement.

The tightening arrangement may be mounted on the support arrangement. The tightening arrangement may be movable to tighten, or maintain tight, the flexible elongate member, when the flexible elongate member is in its securing position extending between the first and second cooperating arrangements.

The tightening arrangement may be movable to a tightened position, in which the flexible elongate member is tightened.

The tightening arrangement may constitute one of the first and second cooperating arrangements. The method may comprise moving the tightening arrangement from the release position to the tightening position to tighten the flexible elongate member.

In one embodiment, the pivot assembly may comprise a lever movable between the released and the tightened positions. The flexible elongate member may be attached to the lever at an attachment region of the lever. The pivot assembly may include a pivot to pivotally attach the lever to the support arrangement. The attachment region may be spaced from the pivot along the lever.

The pivot assembly may comprise projections on the support arrangement, said projections being configured to cooperate with recesses or apertures defined in the lever. Alternatively, the pivot assembly may comprise projections on the lever, said projections being configured to cooperate with recesses or apertures defined in the support arrangement.

In one embodiment, the pivot assembly may comprise a pin to secure the flexible elongate member to the attachment region. The flexible elongate member may be looped around the pin.

Alternatively, a securing member configured to receive the pin may be mounted on the flexible elongate member. The securing member may have a first part that can be attached to the flexible elongate member, and may have a second part defining an aperture through which the pin can extend.

In a further embodiment, the pivot assembly may comprise a recess to receive a portion of the flexible elongate member, which may be an end region thereof. The lever may define the aforesaid recess. A ferrule may be provided at the aforesaid end region to provide fastening of the flexible elongate member to the lever.

The lever may comprise a pair of leg members between which the flexible elongate member can extend. The pivot may comprise a respective pivot member at each leg member.

The flexible elongate member may extend from the first cooperating arrangement to the second cooperating arrangement generally in a plane. In one embodiment, the lever may be movable generally parallel to the aforesaid plane.

In another embodiment, the lever may be movable generally transverse to the aforesaid plane. This embodiment has the advantage that the lever is disposed generally parallel to the article when the lever is in the tightened position, thereby hiding the lever from view behind the article.

In another embodiment, the pivot assembly may comprise a cam member, which may be pivotally mounted on the support arrangement, and may be movable between the released and tightened positions. The cam member may include an eccentric formation to engage the flexible elongate member and tighten the flexible elongate member.

The cam member may include a formation to cooperate with a lever element, wherein the lever element can facilitate movement of the cam member between the tightened and released positions. The lever element may be an external article, such as a screwdriver.

The eccentric formation may be forked, having two forked extensions, to receive the flexible elongate member between the forked extensions. The eccentric formation may engage the engagement member to tighten the flexible elongate member.

In another embodiment, the tightening arrangement may comprise a resilient element, which may be a spring, such as a compression spring. The resilient element may engage the flexible elongate member to tighten the flexible elongate member.

Conveniently, the resilient element is arranged to engage the engagement member, and the resilient element may move to tighten the flexible elongate member. The resilient member may engage the flange.

The resilient element may be expandable to the tightened position.

The support arrangement may include a guide arrangement to guide the flexible elongate member from the first or second cooperating arrangements to the article. The guide arrangement may be configured to guide the flexible elongate member from the tightening arrangement to the article.

In one embodiment described herein, the provision of the guide has the advantage of ensuring that the path of the flexible elongate member from the tightening arrangement to the article remains the same for different sizes of article.

The guide arrangement may comprise a guide surface to engage the flexible elongate member. The guide surface may be provided on the platform. The guide surface may have a curved face to engage the flexible elongate member.

In one embodiment, the guide surface may comprise a shoulder. The guide arrangement may further include a platform extending from the shoulder to the first or second cooperating arrangement.

In another embodiment, the guide arrangement may comprise a wall extending across the tightening arrangement, the wall defining a recess or aperture, through which the flexible elongate member can extend. This embodiment may also include the guide surface, which may have a curved face.

The support arrangement may include a main body. In at least one embodiment, the first and second cooperating arrangements may be provided in the main body. In this embodiment, the main body may comprise a housing portion to house the first and second cooperating arrangements.

The support arrangement may include an article engaging portion, at which the support arrangement can engage the article. The article engaging portion may comprise an article engaging region. The flexible elongate member may be arrangeable across the article engaging portion to extend from the first cooperating arrangement to the second cooperating arrangement. The method may comprise engaging the article and the article engaging portion with each other when the article is secured by the flexible elongate member.

The article engaging portion may have first and second engaging portions extending in opposite directions on the main body. The first engaging portion may engage a first region of the article, and the second engaging portion may engage a second region of the article.

The article engaging portion may have a substantially V-shaped profile. A first arm of the V may comprise the first engaging portion, and a second arm of the V may comprise the second engaging portion.

The article engaging portion may comprise a V-shaped formation on the main body. Alternatively, the article engaging portion may be a V-shaped portion of the main body.

The article engaging portion of the embodiments described herein provides the advantage that it enables the article to be secured tightly against the support arrangement, thereby holding the article in a particularly stable condition.

The method may comprise engaging first and second regions of the article with the first and second engaging portions.

The first and second engaging portions may extend beyond the main body to allow the support arrangement to accommodate articles that are wider than the main body. Thus, the support arrangement may be capable of supporting articles of different widths or diameters.

The first holding arrangement may comprise a holder to hold the flexible elongate member. The second holding arrangement may comprise the clamping arrangement.

In a first embodiment, the first cooperating arrangement may be provided at a first side of the article engaging portion, and the second cooperating arrangement may be provided at a second side of the article engaging portion, opposite the first side.

The first cooperating arrangement may have a first opening through which the flexible elongate member can extend so that the flexible elongate member can extend around the article. The first cooperating arrangement may also have a second opening into which the flexible elongate member can be inserted. In a first embodiment, the first cooperating arrangement may be directed towards the article engaging portion.

The flexible elongate member may extend from the first holding arrangement at the article engaging portion. The first opening of the first cooperating arrangement may be defined in the article engaging portion.

The first opening of the first cooperating arrangement may be an aperture defined in the article engaging portion. Alternatively, the article engaging portion may comprise at least one pair of engaging members, and the first opening of the second cooperating arrangement may be a gap defined between a pair of the engaging members.

The method may comprise directing the flexible elongate member out of the first opening of the first cooperating arrangement in the article engaging portion.

In a second embodiment, the first cooperating arrangement may be directed in a direction that is not towards the article engaging portion. Desirably, the first cooperating arrangement is directed away from the article engaging portion. The method may comprise directing the flexible elongate member out of the first opening of the first cooperating arrangement away from the article engaging portion.

In the second embodiment, the first opening of the first cooperating arrangement may be defined outside the article engaging portion. The method may comprise directing the flexible elongate member out of the first opening of the first cooperating arrangement outside the article engaging portion.

The first opening of the first cooperating arrangement may be defined in a side of the main body, said side desirably extending transverse to the article engaging portion.

Desirably, the first opening of the first cooperating arrangement is defined in a surface of the housing portion of the main body. Desirably, said surface is transverse to the article engaging portion.

In some embodiments, the first cooperating arrangement may comprise a first holding region extending inwardly from an outer surface of the support arrangement, and a second holding region extending from the first holding region. The first holding region may be wider than the second holding region. The first holding region may be configured to receive the engaging member, and the second holding region may be configured to receive the flexible elongate member therethrough. The second cooperating arrangement may have an insertion opening through which the flexible elongate member can be inserted so that it can extend around the article. The second cooperating arrangement may also have an exit opening out of which the flexible elongate member can extend. In the first embodiment, the second cooperating arrangement may be directed towards the article engaging portion.

In the first embodiment, the flexible elongate member may extend from the second cooperating arrangement at the article engaging portion. The first opening of the first cooperating arrangement may be defined in the article engaging portion.

The insertion opening of the second cooperating arrangement may be an aperture defined in the article engaging portion. Alternatively, the article engaging portion may comprise at least one pair of engaging members, and the insertion opening of the second cooperating arrangement may be a gap defined between a pair of the engaging members. The article engaging portion may define two pairs of article engaging members.

The method may comprise directing the flexible elongate member into the insertion opening of the second cooperating arrangement in the article engaging portion.

In a second embodiment, the second cooperating arrangement may be directed in a direction that is not towards the article engaging portion. Desirably, the second cooperating arrangement is directed away from the article engaging portion.

In the second embodiment, the insertion opening of the second cooperating arrangement may be defined outside the article engaging portion. The method may comprise directing the flexible elongate member into the insertion opening of the second cooperating arrangement outside the article engaging portion.

The insertion opening of the second cooperating arrangement may be defined in a side of the main body, said side desirably extending transverse to the article engaging portion.

The insertion opening of the second cooperating arrangement may be defined in a surface of the housing portion of the main body, said surface being transverse to the article engaging portion.

Desirably, the article can engage the apparatus at the article engaging portion, and the flexible elongate member can extend around the article from the first cooperating arrangement to the second cooperating arrangement.

The engagement formation may be a hole defined in the support arrangement, the hole being configured to receive the engagement member. The hole may have opposed openings so that the flexible elongate member can pass through the hole. The hole may be defined in the main body. The hole may be defined in the housing portion of the main body.

The engagement formation may be arranged such that the flexible elongate member can be passed through the hole in a first direction until the engaging member engages the engagement formation. The method may comprise inserting the flexible elongate member into the hole until the engaging member engages the engagement formation.

Conveniently, the engagement of the engaging member with the engagement formation prevents further passage of the flexible elongate member through the hole.

Each clamping arrangement may define a passage for the respective cooperating arrangement. The passage may provide a pathway through which the flexible elongate member can extend. The pathway may have opposed openings so that the flexible elongate member can pass through the pathway. The pathway may be defined in the main body. The pathway may be defined in the housing portion of the main body.

Each clamping arrangement may further include a clamping member movable towards the pathway to engage the flexible elongate member and clamp the flexible elongate member in the pathway. The method may comprise inserting the flexible elongate member into the pathway, and pulling the flexible elongate member so that the clamping member clamps the flexible elongate member in the pathway.

The pathway may be defined, at least in part, by a wall. The clamping member may be configured to push the flexible elongate member against the wall, thereby clamping the flexible elongate member to the wall.

Each clamping arrangement may include urging means to urge the clamping member towards the pathway. The method may comprise inserting the flexible elongate member into the pathway, and pulling the flexible elongate member so that the urging means can urge the clamping member in the direction of the flexible elongate member, so that the clamping member engages the flexible elongate member and clamps the flexible elongate member in the pathway. The clamping member may comprise a wedge.

The apparatus may include disengagement means to disengage the clamping member from engagement with the flexible elongate member. The disengagement means may comprise a tool having an insertion portion, which may be elongate. Desirably, the insertion portion can be inserted into the support arrangement to engage the clamping member and disengage the clamping member from engagement with the flexible elongate member.

The support arrangement may define an access aperture to provide access to the clamping member by the insertion portion. The insertion portion can be inserted into the access aperture to engage the clamping member.

One embodiment of the securing apparatus is designed to secure articles in the form of pipes thereto. Where the support arrangement includes the outwardly extending engaging portions, the support arrangement can accommodate different sizes of pipes.

The securing apparatus may include a fastening formation to fasten the securing apparatus to a fastening member, such as a suspension arrangement, which may comprise a downwardly extending threaded bar. Alternatively, the suspension arrangement may comprise other fastening members having threaded end regions. The other fastening members may comprise a bolt, stud or eye bolt.

The stud may be connected to a further flexible elongate member. The eye bolt may define an aperture to receive a suspending member therethrough.

In some embodiments, the fastening formation may be threaded, and may be a recess. The recess may be threaded to cooperate with the threaded bar to allow the securing apparatus to be suspended therefrom.

In a modification, the fastening formation may be a rear member, which may be substantially flat member, such as a plate. The rear member may have apertures through which suitable fasteners, such as screws can be inserted.

In further modifications, the fastening formation may comprise other formations. An example of such a fastening formation is an eye defining an aperture to receive a fastening member therethrough.

A further example may comprise a pair of cooperating members having cooperating formations facing each other. A threaded fastening formation may be received between the cooperating members.

Another example may comprise a pair of interface members, each having a generally L-shaped configuration. Each interface member may have a connecting portion connecting the interface member to the main body. Each interface member may have an inwardly directed overlapping portion.

A space may be defined between the interface members to receive an end region of a fastening member such as a cooperating end member. The space may have a proximal wider region adjacent the body and a distal narrower region.

The space may cooperate with an end region of the fastening member, which may have a radially extending flange to cooperate with, and be received between, the interface members.

In another embodiment, the main body may define a recess to receive an end region of a screw. The recess may be threaded. The screw may comprise a wood screw.

In a further example, the fastening formation may comprise a bridge element defining an aperture through which the fastening member can extend. The bridge element may comprise support means and a connecting member. The support means may comprise first and second support members, and the connecting member may extend between the first and second support members to connect the first and second support members to each other.

In one embodiment, the support means may be provided on the main body. In another embodiment, the support means may be provided on the article engaging portion. The support members may space the connecting member from the main body or from the article engaging portion. A gap may be defined between the support members to receive a portion of the fastening member.

In said other embodiment, the first and second cooperating arrangements may be provided on, or constitute, the first and second support members respectively. In this embodiment, the first and second cooperating arrangements may be arranged so that a plane extending centrally through the securing apparatus extends substantially centrally through the first and second cooperating arrangements. In this embodiment, the article engaging portion may constitute the main body.

In the embodiment described in the preceding paragraph, the article to be secured by the securing apparatus may be elongate, having a main longitudinal axis and, in use, the aforesaid plane may extend at a right angle to said longitudinal axis. When the flexible elongate member extends between the first and second cooperating arrangements around the article the flexible elongate member may be substantially coplanar with the aforesaid plane, and may in use extend at a right angle to the aforesaid longitudinal axis of the article.

An adjustment member may extend through the aperture. The adjustment member may engage the fastening member.

The adjustment member may be configured to cooperatively engage the fastening member. The adjustment member may be movable along the fastening member to adjust the position of the adjustment member along the fastening member.

The fastening member and the adjustment member may be correspondingly threaded. The adjustment member may comprise a main portion, which may be cylindrical. The main portion may define the threads. The adjustment member may further include a flange portion extending outwardly from the main portion. The flange portion may be configured to engage the bridge element.

In one embodiment, the article engaging portion may include the tightening arrangement in the form of a resilient member to engage the article. The resilient member may be incorporated in the securing apparatus with a further tightening arrangement, such as a pivot assembly. The resilient member provides the advantage in one embodiment that it accommodates movement of the flexible elongate member when the flexible elongate member is clamped.

Protective means may be provided on the flexible elongate member to provide protection thereto. The protective means may comprise a protective member mounted over the flexible elongate member.

The protective member may comprise a protective sleeve or tube through which the flexible elongate member extends.

In one embodiment, the protective member may comprise a tube, which may be formed of a plastics material. In another embodiment, the protective member may comprise a compressible sleeve, which may be arranged on the flexible elongate member so that the sleeve is compressed when the flexible elongate member is pulled tight. The sleeve may be formed of a fabric material.

Reference is now made to the accompanying drawings, in which:
Figure 1 shows a first securing apparatus;
Figure 2 shows the securing apparatus of Figure 1 suspended from a suspension arrangement;
Figure 3 shows the securing apparatus shown in Figure 1 with an article arranged for securing to the securing apparatus;
Figure 4 is a close up of the securing apparatus shown in Figure 3 with the article being secured thereto;
Figure 5 is a sectional view of the region marked A in Figure 1, showing a first cooperating arrangement;
Figure 6 is a sectional view of the region marked B in Figure 4 showing a second cooperating arrangement;
Figure 7 shows the securing apparatus of Figure 1 securing thereto an article that is larger than the article shown on Figure 4;
Figure 8 shows a front view of a second securing apparatus;
Figure 9 is a part sectional rear view the securing apparatus shown in Figure 8, showing a first cooperating arrangement;
Figure 10 is a part sectional front view of the securing apparatus shown in Figure 8, showing a second cooperating arrangement;
Figure 11 shows a modification of the securing apparatus shown in Figures 8 to 10 with a different fastening formation;
Figures 12A to 12C show examples of the securing apparatus shown in Figures in 8 to 11 cooperating with different fastening members;
Figures 13A to 13C show modification of the securing apparatus shown in Figures 8 to 11 with different fastening formations;
Figure 14A shows a front view of the use of the securing apparatus shown in Figures 8 to 10 securing a plurality of electric cables;
Figure 14B shows a plurality of the securing apparatus shown in Figures 8 to 10 holding a plurality of electric cables;
Figures 15A and 15B show a securing apparatus with a further fastening member;
Figures 16A and 16B show a further modification of a securing apparatus with yet another fastening member;
Figure 17 shows a further modification of a securing apparatus;
Figure 18 shows a sectional view of a further securing apparatus, in which first and second clamping arrangements are provided;
Figure 19 shows a further securing apparatus with a tightening arrangement in a released position,
Figure 20 shows a close up view of the tightening arrangement shown in Figure 19 with the tightening arrangement being moved to a tightened position;
Figure 21 shows the securing apparatus shown in Figure 19 with the tightening arrangement in the tightened position;
Figure 22 shows a sectional side view showing an example of the attachment of the flexible elongate member to the tightening arrangement shown in Figures 19 to 21;
Figure 23 shows a connector for connecting the flexible elongate member to the tightening arrangement;
Figure 24 shows a sectional side view of a further securing apparatus with a further example of the tightening arrangement in one position;
Figure 25 shows a view similar to that shown in Figure 24 with the further example of the tightening arrangement in another position;
Figure 26 shows a securing apparatus with another example of the tightening arrangement in a released position;
Figure 27 shows the securing apparatus shown in Figure 26 with the tightening arrangement in a tightened position;
Figures 28A to 28B show the steps for operating the tightening arrangement shown in Figures 26 and 27;
Figure 29 shows a further securing apparatus with the tightening arrangement in a released position;
Figure 30 shows the securing apparatus shown in Figure 29 with the tightening arrangement in a tightened position;
Figures 31A and 31B show two stages for moving the tightening arrangement shown in Figures 29 and 30 to the tightening position;
Figure 32 shows a sectional side view of a lever of the tightening arrangement shown in Figures 29 and 30;
Figure 33 shows the securing apparatus shown in Figures 29 and 30 with a tool for releasing a clamping arrangement;
Figures 34A and 34B show a sectional side view of a part of the securing apparatus, showing the steps for releasing the clamping arrangement using the tool shown in Figure 33;
Figures 35A to 35C show an embodiment of the securing apparatus with protective means on the flexible elongate member;
Figure 36A shows another embodiment of the securing apparatus;
Figures 36B and 36C show the embodiment of Figure 36A in use securing an article
Figure 36D shows the embodiment of Figures 36A to 36C without a resilient member;
Figure 37 shows an embodiment of the securing apparatus with another fastening formation;
Figure 38 shows a resilient member for use in the securing apparatus;
Figure 39 shows a securing apparatus having the resilient member shown in Figure 38 mounted thereon;
Figure 40 shows a further embodiment of a securing apparatus;
Figure 41 shows the embodiment of Figure 40 with a lever omitted; and
Figure 42 shows a variation of the embodiment shown in Figure 41; and
Figure 43 shows yet another embodiment of a securing apparatus.

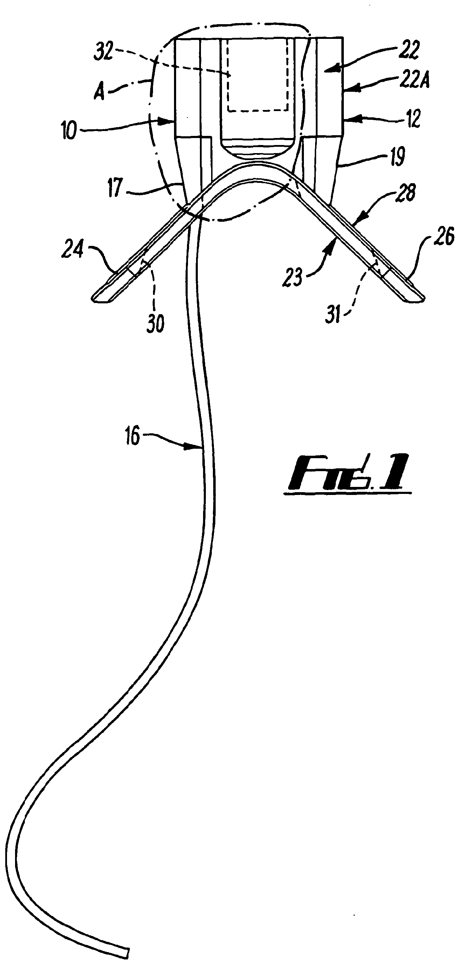

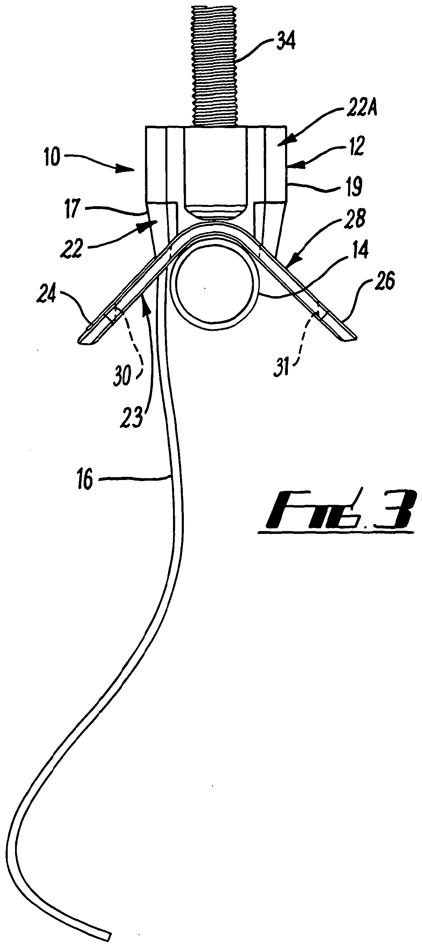

Referring to the drawings, Figure 1 shows a securing apparatus 10 which comprises a support arrangement 12 for supporting an article 14 in the form of a pipe (see Figures 3, 4 and 7 and others) to be secured to the securing apparatus 10. Each article 14 is shown in end view in the drawings.

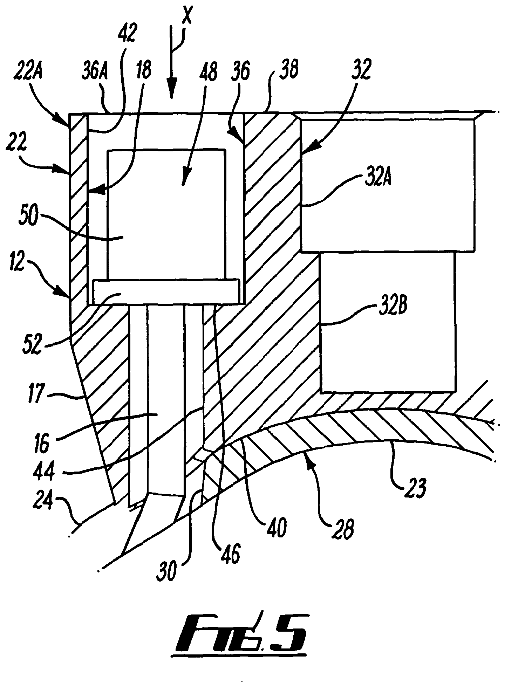

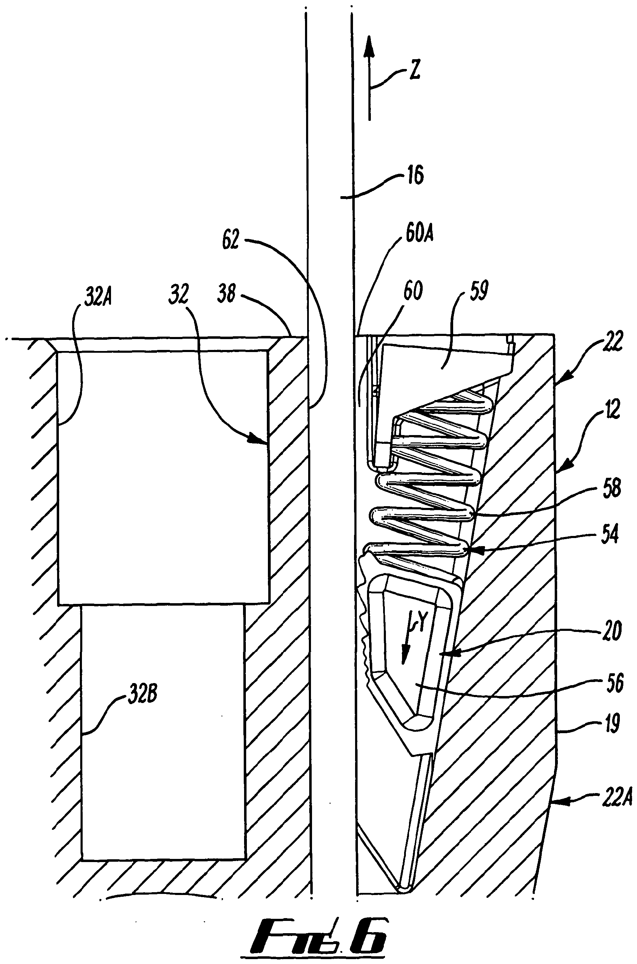

The securing apparatus 10 further includes a flexible elongate member 16 in the form of a wire, cable, wire rope or strand. The securing apparatus 10 comprises a first cooperating arrangement in the form of a first holding arrangement 18 at a first side 17 (see Figure 5). The securing apparatus 10 further includes a second cooperating arrangement in the form of a second holding arrangement 20 at a second side 19 (see Figure 6).

The flexible elongate member 16 is mounted on the support arrangement 12 at the first holding arrangement 18, and extends therefrom across the article 14 to the second holding arrangement 20.

The support arrangement 12 comprises a main body 22 and an article engaging portion 23. The main body 22 comprises a housing portion 22A. The first and second holding arrangements 18, 20 are provided in the housing portion 22A.

The article engaging portion 23 includes a V-shaped engaging formation 28 on the main body 22. The V-shaped engaging formation 28 is provided to receive the pipe, and comprises first and second engaging portions 24, 26 which extend outwardly from the housing portion 22A.

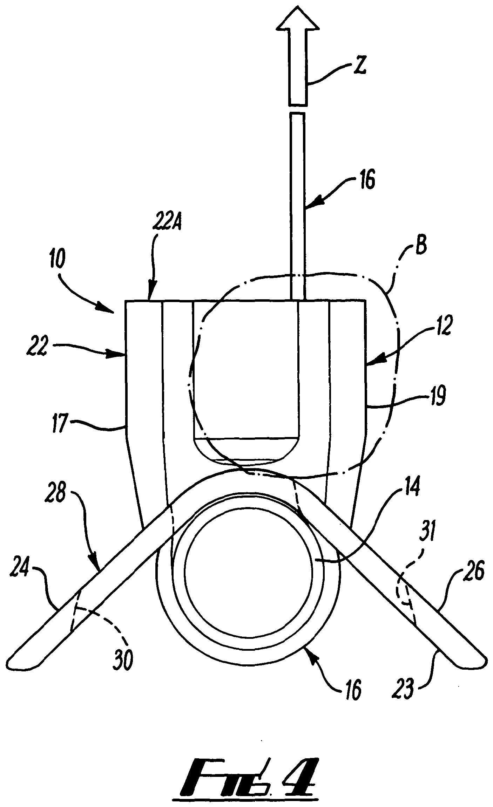

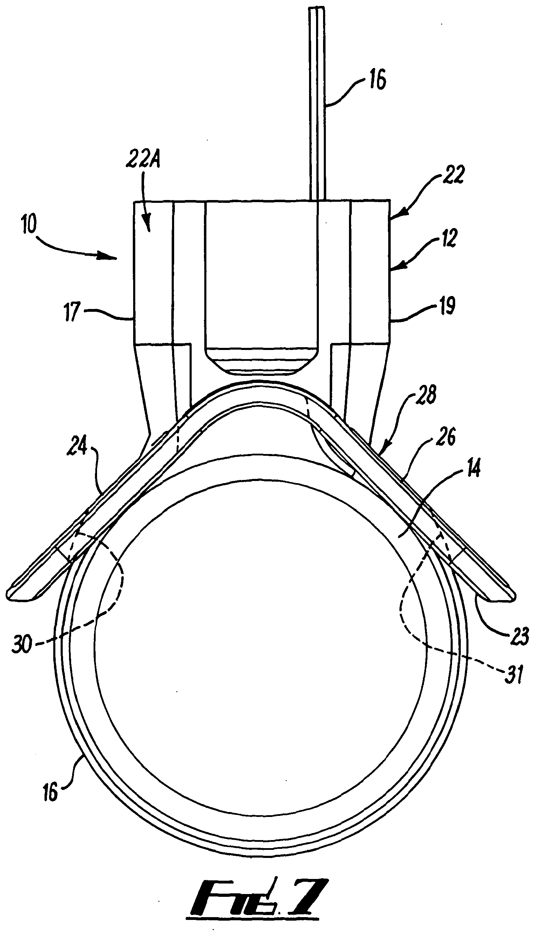

The engaging portions 24, 26 extend beyond the housing portion 22A to allow the securing apparatus 10 to secure pipes 14 of different sizes, for example narrower article 14 in the form of a smaller diameter pipe shown in Figures 3 and 4, and a wider article 14 in the form of a larger diameter pipe shown in Figure 7.

In Figure 4, the first engaging portion 24 defines a first opening 30 for the first holding arrangement 18, through which the flexible elongate member 16 can extend into the article engaging portion 23 from the second holding arrangement 18. The second engaging portion 26 also defines an insertion opening 31 for the second holding arrangement 20. The insertion opening in the second engaging portion 26 allows the flexible elongate member 16 to be inserted so that it extends into the main body 22 from the article engaging portion 23. The first opening 30, and the insertion opening 31 are shown in broken lines in Figures 1, 4 and 7, and each opening 30, 31 is in the form of a slot.

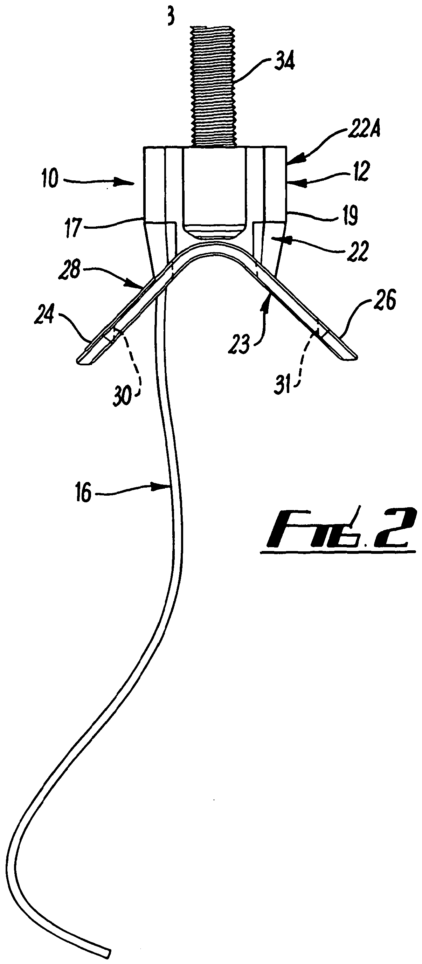

The housing portion 22A further includes a fastening formation 32 in the form of a threaded recess (shown in Figure 1) which can cooperate with a suspension arrangement comprising an externally threaded bar 34 (shown in Figures 2 and 3), to be suspended from the threaded bar 34.

As shown in Figures 5 and 6, the fastening formation 32 has a first threaded recess section 32A of a first diameter, and a second threaded recess section 32B of a second diameter. Thus, the threaded bar 34 (shown in Figures 2 and 3) can have one of two different diameters to threadably engage the threaded fastening formation 32.

The threaded bar 34 can be mounted on an upper part of a building, such as a roof or ceiling. A plurality of such threaded bars 34 may be so mounted and a respective securing apparatus 10 can be fastened to each threaded bar 34, thereby providing a plurality of supports for an article 14 secured to the plurality of securing apparatus 10.

Referring to Figure 5 there is shown a sectional view of the region marked A in Figure 1, showing the first holding arrangement 18.

The first holding arrangement 18 comprises a chamber 36. In Figures 1 to 7, the chamber 36 has an inlet 36A, into which the flexible elongate member 16 can be inserted. The chamber extends to the first opening 30, out of which the flexible elongate member 16 can extend.

The chamber 36 extends from the inlet 36A in an upper surface 38 of the housing portion 22A to the first opening 30 in the first engaging portion 24. Thus, the chamber 36 allows the flexible elongate member 16 to be threaded therethrough in the direction of the arrow X through the second opening 36A and out of the first opening 30.

The chamber 36 comprises a first holding region 42 extending inwardly from the upper second opening 36A in the upper surface 38, and a second holding region 44 extending from the first holding region 42 to the first opening 30. As can be seen, the first holding region 42 is wider than the second holding region 44, so that an annular engagement formation in the form of an abutment 46 extends radially inwardly between the first and second holding regions 42, 44.

The flexible elongate member 16 is provided at one end with an engagement member in the form of a ferrule 48, which has a main part 50 secured to the flexible elongate member, for example by welding, brazing, swaging or crimping . The ferrule 48 may also include a radially outwardly extending flange 52.

The outer diameter of the flange 52 is greater than the inner diameter of the abutment 46. Thus, the flexible elongate member 16 can be passed into the chamber 36 via the second opening 36A and can exit the chamber 36 via the first opening 30.

The flexible elongate member 16 passes through the chamber 36 in a first direction from the first holding region 42 to the second holding region 44 until the ferrule 48 engages the abutment 46. The engagement of the ferrule 48 with the abutment 46 prevents further passage of the flexible elongate member 16 through the chamber 36. As a result, the flexible elongate member 16 is held on the support arrangement 12.

Figure 6 shows a sectional view of the region marked B in Figure 4, showing the second holding arrangement 20, which comprises a clamping arrangement 54.

The clamping arrangement 54 comprises a clamping member in the form of a wedge 56, which is spring biased by a spring 58 in the direction indicated by the arrow Y towards a passage 60 defined by a wall 62. The spring 58 engages a reaction support 59 to provide a reaction for the spring 58 so that it can push the wedge 56 in the direction of the arrow Y.

The passage 60 extends through the housing portion 22A between the first opening 31 defined in the engaging portion 26 (not shown in Figure 6) and an upper second opening 60A defined in the upper surface 38.

When the flexible elongate member 16 is pulled in the direction indicated by the arrow Z, the wedge 56 is pushed by the flexible elongate member 16 in the direction opposite to the arrow Y. As a result, the flexible elongate member 16 can be pulled through the passage 60 in the direction of the arrow Z, until the flexible elongate member 16 is tightened against the article 14.

The flexible elongate member 16 can then be released, and the weight of the article 14 pulls the flexible elongate member 16 in the direction opposite to the arrow Z. Since the wedge 56 is urged by the spring 58 into engagement with the flexible elongate member 16, this movement of the flexible elongate member 16 tightens the wedge 24 against the flexible elongate member 16, so that the flexible elongate member 16 is clamped between the wedge 56 and the wall 62.

The movement of the flexible elongate member 16 in the direction opposite to the arrow Z causes the wedge 56 to be urged further into engagement with the flexible elongate member 16, thereby tightening the wedge 56 against the flexible elongate member 16. Thus, the flexible elongate member 16 is clamped by the wedge 56.

There is thus described a securing apparatus 10, which can be used to secure pipes 14 of different diameters. Figure 7 shows the use of the securing apparatus 10 in securing an article 14 that is of a larger diameter than the article 14 secured by same the securing apparatus 10 as shown in Figures 3 and 4.

Further modifications are possible. For example, the securing apparatus 10 can be used in orientations other than as shown in the drawings, for example at 90º or 180º to the orientation shown in the drawings.

In another modification, only one of the cooperating arrangements may be arranged to hold the flexible elongate member. In this modification, the flexible elongate member 16 can be held at one of its ends outside the securing apparatus, for example by being secured to a ceiling or roof strut. The securing apparatus in this modification is, thus, suspended by the flexible elongate member from the ceiling or roof strut. The flexible elongate member 16 of this modification may be devoid of the ferrule 48, and may extend freely through the first holding arrangement 18, to be secured by the first holding arrangement 20. Thus, with this modification, the article 14 is held securely by the flexible elongate member 16, which is pulled tight against the article 14 by the weight of the article 14.

In a further modification, the first and second engaging portions 24, 26 can each be in the form of a pair of parallel engaging elements, whereby the first and second openings are defined as respective gaps between the engaging elements of each pair.

The securing apparatus 10 can also be used to secure articles other than pipes.

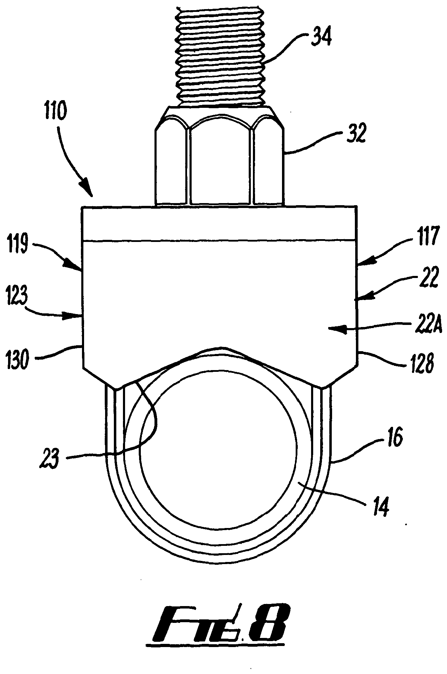

Figures 8 to 11 show a securing apparatus 110. The securing apparatus 110 comprises many of the features of the securing apparatus 10 described above, and these have been designated with the same reference numerals as in Figures 1 to 7, and operate in the same way as described above.

The securing apparatus 110 shown in Figures 8 to 11 differs from the securing apparatus10 shown in Figures 1 to 7, in that the securing apparatus 110 comprises first and second holding arrangements 18 and 20 which are oriented transversely to the orientation of the first and second holding arrangements 18 and 20 shown in Figures 1 to 7. Further, the article engaging portion 23 is in the form of a V-shaped edge of the main body 22,

As shown in Figures 8 to 10, the housing portion 22A has opposite entrance and exit sides 117 and 119 for threading the flexible elongate member 16, as explained below. The housing portion further includes a first enclosure 122 housing the first holding arrangement 18, and a second enclosure 123 housing the second holding arrangement 20. As can be seen, the first enclosure 122 also defines the threaded fastening formation 32.

The first holding arrangement 18 comprises a hole 136, which has a first opening 136A, being an exit opening for the flexible elongate member 16. The hole 136 also has a second opening 136B, being an insertion opening for the flexible elongate member 16.

The flexible elongate member 16 can be threaded into the hole 136 to enter via the second opening 136B in the direction of the arrow X and to exit via the first opening 136A. The flexible elongate member is continued to be threaded through the hole 136 until the flange 52 engages the abutment 46. In this position, the flexible elongate member is held in the second holding arrangement 18.

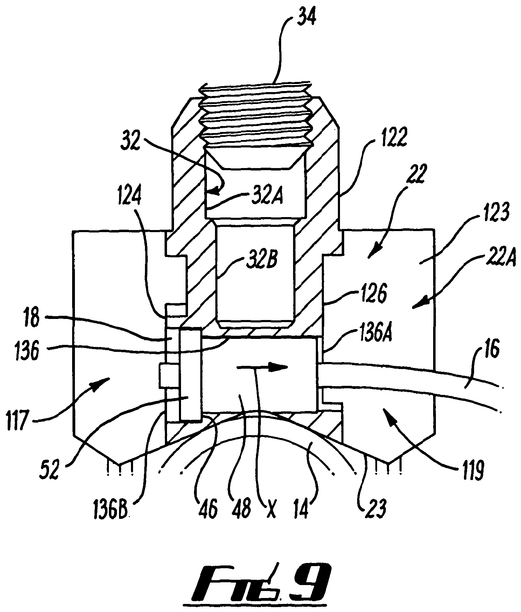

The hole 136 is oriented so that the first and second openings 136A and 136B are defined at the opposite sides 117 and 119 of the housing portion 22A. Figure 9 shows that the first enclosure 122 has an insertion surface 124 at the entrance side 117 of the housing portion 22A, and an exit surface 126 at the exit side 119 of the housing portion 22A. As can be seen, the first and second openings 136A and 136B are defined outside the article engaging portion 23.

The insertion and exit surfaces 124 and 126 extend transverse to the article engaging portion 23. The first and second openings 136A and 136B of the hole 136 are defined in the respective insertion and exit surfaces 124 and 126 of the first enclosure 122.

The second cooperating formation 20 comprises a passage 60, having first and second openings 160A and 160B in the second enclosure 123.

The flexible elongate member 16 can be threaded into the passage 60 via the first opening 160A in the direction of the arrow Z, thereby pushing the wedge 56 in the direction opposite to the arrow Y. The flexible elongate member is threaded out of the passage 60 via the second opening 160B. Continued threading of the flexible elongate member in the direction of the arrow Z tightens the flexible elongate member 16 against the article 14.

When the flexible elongate member 16 has been tightened against the article 14, the flexible elongate member 16 can be released, and the weight of the article 14 pulls the flexible elongate member 16 in the direction opposite to the arrow Z. The wedge 56 is then urged against the article 14 to clamp the article 14 between the wedge 56 and the wall 62, in the same way as described above.

The passage 60 is oriented so that the first and second openings 160A, 160B are defined at the opposite entrance and exit sides 117 and 119 respectively of the housing portion 22A.

The second enclosure 123 has an entrance surface 128 at the entrance side 117 of the housing portion 22A, and an exit surface 130 at the exit side 119 of the housing portion 22A.

The entrance and exit surfaces 128, 130 of the second enclosure 123 extend transverse to the article engaging portion 23. The first and second openings 160A, 160B of the passage 60 are defined in the respective entrance and exit surfaces 128, 130 of the second enclosure 123. As can be seen, the first and second openings 160A and 160B are defined outside the article engaging portion 23.

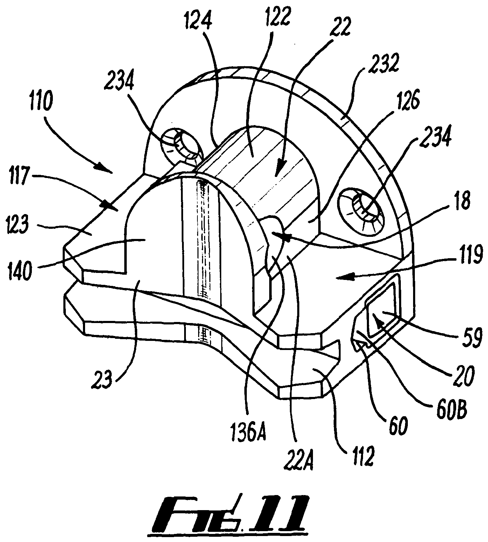

The securing apparatus 110 shown in Figures 8 to 10 is suspended by a threaded bar 34 in a similar manner to the securing apparatus described with reference to Figures 1 to 7. Figure 11 shows a modification, which is intended to be secured to a support, such as a wall, or other generally planar support.

The securing apparatus 110 shown in Figure 11 comprises many of the features comprises of the securing apparatus 110 shown in Figures 8 to 10, and these features have been designated with the same reference numerals as in Figures 8 to 10, and operate in the same way as described above.

The securing apparatus 110 shown in Figure 11 differs from the securing apparatus 110 shown in Figures 8 to 10, in that the securing apparatus 110 does not possess a fastening formation 32 in the form of the threaded. Instead the securing apparatus 10 includes a fastening formation 232 comprising a rear element in the form of a substantially flat plate.

The fastening formation 232 defines apertures 234 through which screws (not shown) can be inserted to fasten the securing apparatus 210 to a building wall or other planar surface. Thus, the securing apparatus 210 arranged against a wall with the fastening formation 232 engaging the wall. It can be used to arrange pipes adjacent the wall, so that the pipes run along the wall. The pipes can be held vertically, horizontally, or at any angle in between.

Figure 11 also shows that a channel 112 is defined by the article engaging portion 23. Although the channel 112 is shown only in Figure 11, it is also present in the version of the securing apparatus 110, shown in Figures 8 to 10.

The securing apparatus 110 also includes a stabilising element 140 extending forwardly of the article engaging portion 23. Although, the stabilising element 140 is shown only in Figure 11, the stabilising element is also present in the versions of the securing apparatus 110 shown in Figures 8 to 10. The stabilising element engages the article 14 and provides stability thereto.

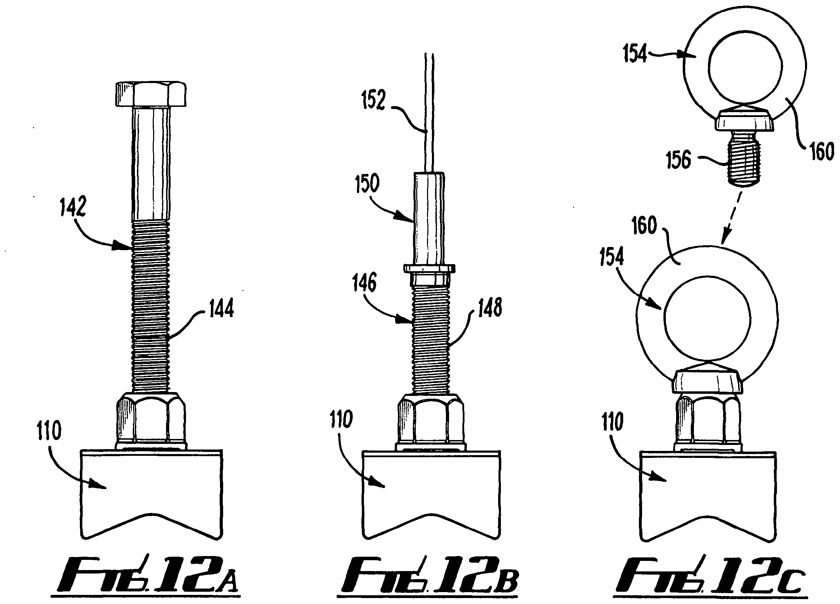

Referring to Figures 12A to 12C, there is shown the securing apparatus 110 depicted in Figures 8 to 10 in use with different fastening members.

In Figure 12A, the securing apparatus 110 is shown in use with a bolt 142, having a threaded end region 144 to be threadably received in the threaded recess 32A or 32B of the securing apparatus 110.

In Figure 12B, the securing apparatus 110 is shown in use with a stud 146 having a threaded end portion 148 threadably received in the threaded recess 32A or 32B. The stud 146 includes a connecting portion 150 on the threaded end portion 148. The connecting portion connects the stud 146 to a wire 152, for example by crimping. The stud 146 allows the securing apparatus to be suspended by the wire 152.

In Figure 12C, the securing apparatus 110 is shown in use with an eye bolt 154, which comprises a threaded end portion 156, and a ring 158 defining an aperture 160. The arrow E shows the attachment of the eye bolt 154 to the securing apparatus 110, by the threaded end portion 156 being threadably received in the appropriate one of the recesses 32A and 32B.

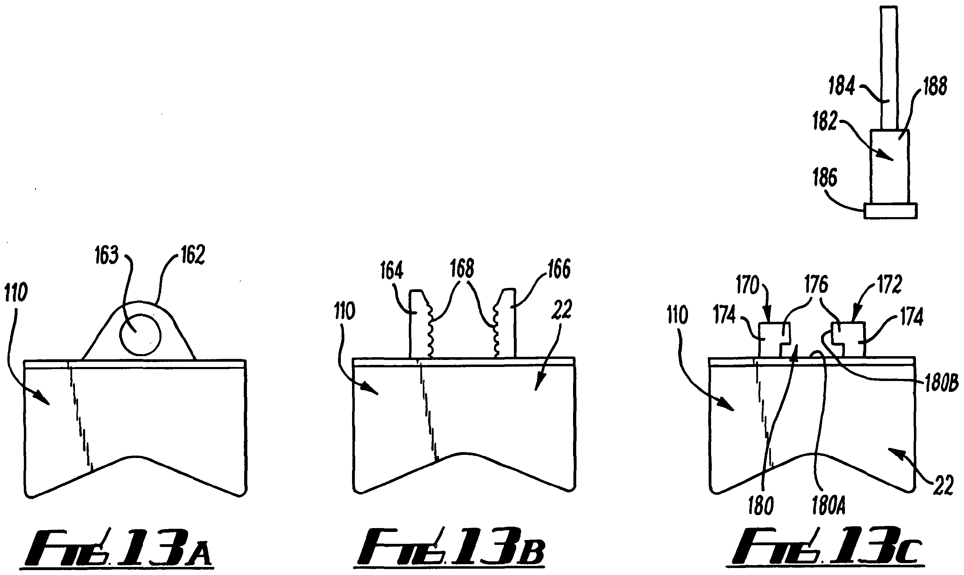

Figures 13A to 13C show modifications of the securing apparatus 110 with different fastening formations. In Figure 13A, the fastening formation is in the form of an eye 162, defining an aperture 163.

Figure 13B shows a pair of cooperating members 164, 166, each which has thread engaging elements 168 facing each other. The thread engaging elements cooperate with and engage the threads of a threaded item, such as a threaded bar 34 or a bolt 142. The threaded item can be screwed onto the cooperating members 164, 166 or simply pushed onto the cooperating members 164, 166, in the manner of a snap fit.

Referring to Figure 13C, there is shown a securing apparatus 110 with a pair of interface members 170, 172, each of which is of a generally L-shaped configuration. Each interface member 170, 172 has a connecting portion 174 connecting the interface portions 170, 172 to the main body 22. Each interface member 170, 172 also has an inwardly directed overlapping portion 176.

A space 180 is defined between the interface members 170, 172 and can receive an end region of a cooperating end member 182 secured to a wire 184. The space 180 has a proximal wider region 180A adjacent the body 22 and a distal narrower region 180B

In Figure 13C, the end region of the cooperating end member 182 has a radially outwardly extending flange 186 and a connection portion 188 to connect the cooperating end member 182 to the wire 184.

The flange 186 can be received by the wider region 180A, and the connection portion can be received by the narrower region 180. The flange 186 engages the overlapping portions 176 to prevent inadvertent removal of the cooperating end member 182 when so received by the space 180.

The eye 162, the cooperating members 164, 166, and the interface members 170, 172, can be provided on the main body by being cast thereon during formation of the main body 22.

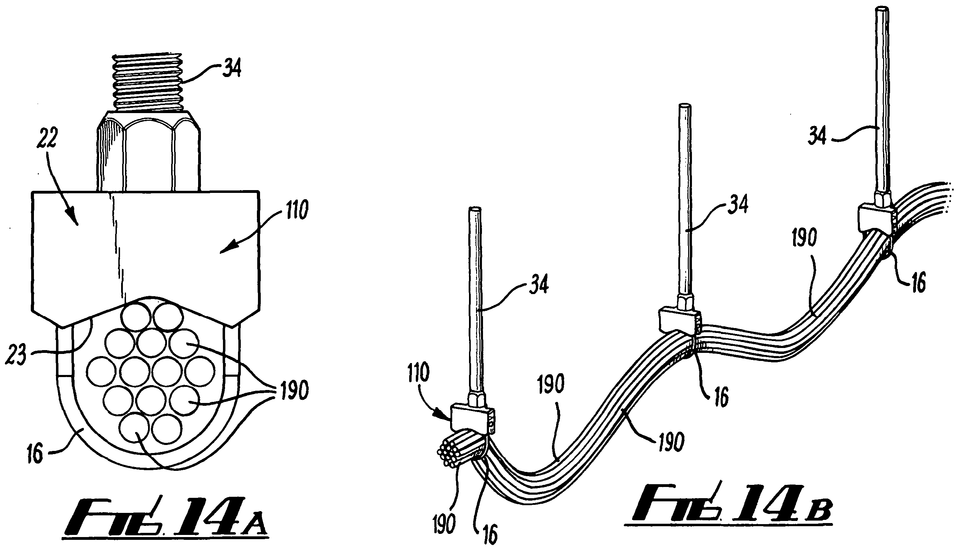

The securing apparatus 110 can be used to hold articles other than pipes. An example of such use is shown in Figures 14A and 14B.

Figure 14A shows a front view of the securing apparatus 110 securing thereto a plurality of electrical cables 190. The electrical cables 190 are secured by the securing apparatus 110 between the main body 22 and the flexible elongate member 16, with the upper most cables 190 in engagement with article receiving region 23. The securing apparatus 12 is fastened in its position by a threaded bar 34.

Figure 14B shows a plurality of securing apparatus 110 fastened to a plurality of threaded bars 34 arranged one after the other and, hence, the plurality of the securing apparatus 110 are also arranged one after the other. The electrical cables 190 are secured to, and suspended between, the securing apparatus 110.

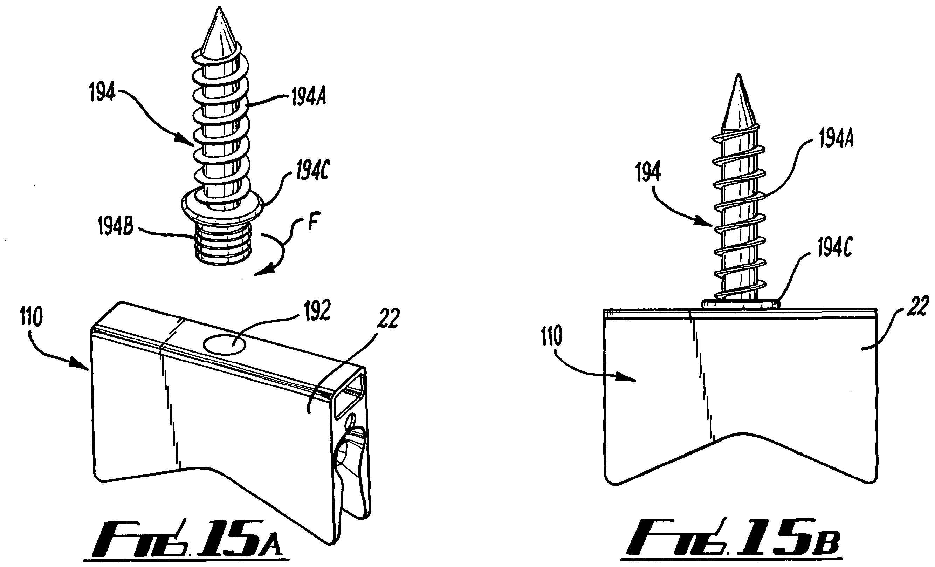

Figures 15A and 15B show a further modification of the securing apparatus 110, in which a threaded aperture 192 is formed in the main body 22. A screw 194, for example a wood screw, has a main threaded portion 194A to enable the screw 194 to be screwed into a suitable material, for example wood.

The screw 194 also includes a threaded fastening portion 194B for fastening the screw 194 to the securing apparatus 110, by screwing the fastening portion 194B into the aperture 192 in the main body of the securing apparatus 110, as shown by the arrow F. The screw 194 also includes a flange portion 194C arranged between the main threaded portion 194A and the fastening portion 194B.

When the fastening portion 194B is screwed into the aperture 192 in the main body 22, the screw 192 is tightened until the flange portion 194C tightly engages the main body 22 around the aperture 192.

Figure 15B shows the screw 194 having been fully screwed into the aperture 192, so that the flange portion 194C tightly engages the main body 22.

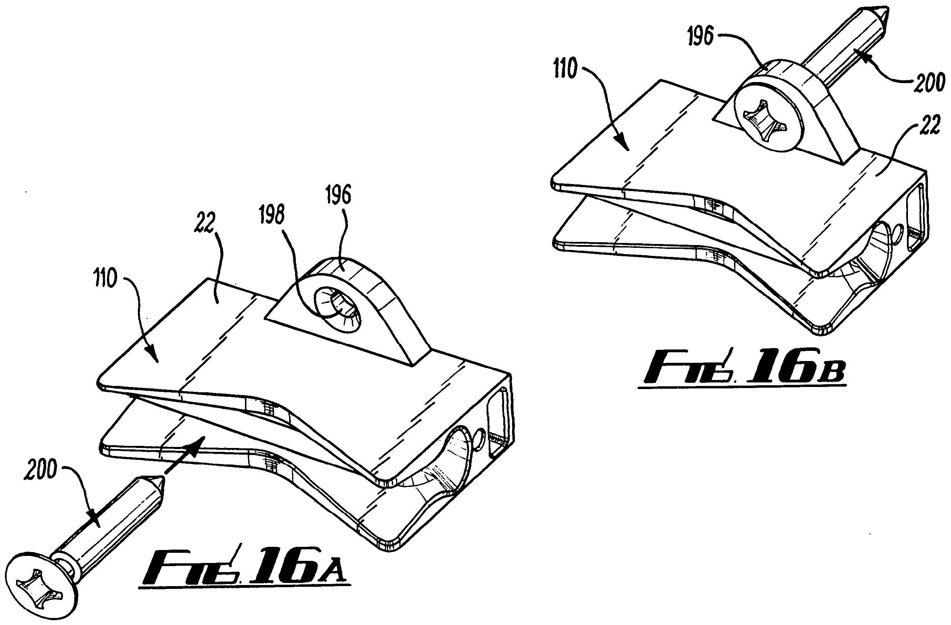

Figure 16A and 16B show another modification of the securing apparatus 110, which is similar to the securing apparatus 110 shown in Figure 11.

The securing apparatus 110 shown in Figures 16A and 16B has a fastening formation in the form of a lug 196 on the main body 22. The lug 196 defines a single aperture 198 through which a fastening member 200, in the form of a screw or nail, can be inserted. The fastening member 200 can be used to fasten the securing apparatus 110 to a suitable support, such as a wall.

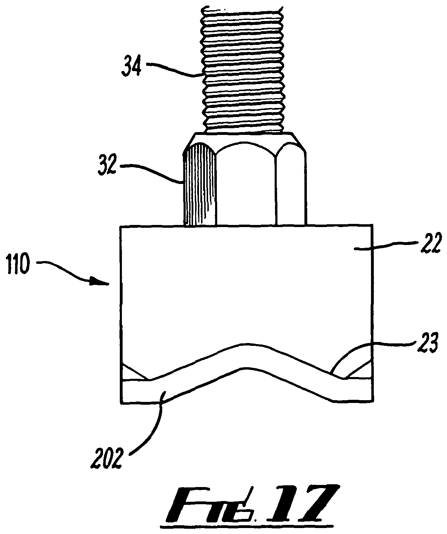

A still further securing apparatus 110 is shown in Figure 17 in which a resilient member 202 is provided on the V-shaped edge forming the article engaging portion 23. The resilient member 202 deforms when the article 14 or other article is pushed against it by the flexible elongate member 16.

As described above, the weight of the article 14 pulls down on the flexible elongate member 16, which causes the wedge 56 to clamp the flexible elongate member. The deformation of the resilient member 202 has the effect of ensuring that the article 14 remains tightly engaged against the resilient member 202 after the flexible elongate member has been clamped. Thus, the resilient elongate member 502 is a form of tightening arrangement.

The securing apparatus 10 or 110 secures the article 14 between the flexible elongate member 16 and the main body 22. The flexible elongate member can be tightened against the articlel4 so that the article 14 engages the flexible elongate member and the main body 22.

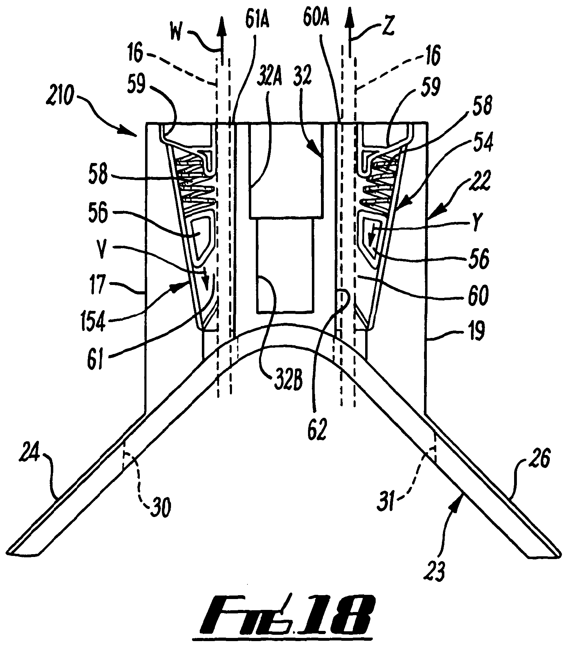

A further modification is shown in Figure 18, which is a sectional view of a securing apparatus 210, similar to the securing apparatus 10 shown in Figures 1 to 7, and includes a clamping arrangement 54, which is the same as the clamping arrangement 54 shown in Figure 6. The securing apparatus 210 differs from the securing apparatus 10 in that the holding arrangement 36 is replaced by a further clamping arrangement, generally designated 154 in Figure 18, in addition to the first mentioned clamping arrangement 54.

The further clamping arrangement 154 has the same features as the first mentioned clamping arrangement 54, and these features are designated with the same reference numerals as in Figure 6.

The further clamping arrangement 154 is provided at the first side 17 of the main body, and is directed in the same direction as the first mentioned clamping arrangement 54. The further clamping arrangement 154 defines a further passage 61.

The passage 61 in the further clamping arrangement 154 has a first opening 30, being an inlet opening for the flexible elongate member 16, at the bottom of the main body 22, as shown in Figure 18. The passage 61 has a second opening 61A, being an outlet opening for the flexible elongate member 16, at the top of the main body 22.

Thus, the flexible elongate member 16 is threaded through the passage 61 in the further clamping arrangement 154 in the direction of the arrow W.

The flexible elongate member 16 is also threaded through the first mentioned clamping arrangement 54 in the direction of the arrow Z, so that that the flexible elongate member extends around the article 24 (not shown in Figure 18) received at the article engaging portion 23.

One or both ends of the flexible elongate member 16 are then pulled tight in the directions indicated by the arrows W and Z.

The flexible elongate member 16 can then be released, and the weight of the article 14 pulls the flexible elongate member 16 through the passages 60, 61 of the clamping arrangements 54, 154 in the direction opposite to the arrows W and Z. Since each wedge 56 is urged by the respective spring 58 into engagement with the flexible elongate member 16, this movement of the flexible elongate member 16 tightens the respective wedge 56 against the flexible elongate member 16, so that the flexible elongate member 16 is clamped between the respective wedge 56 and each wall 62.

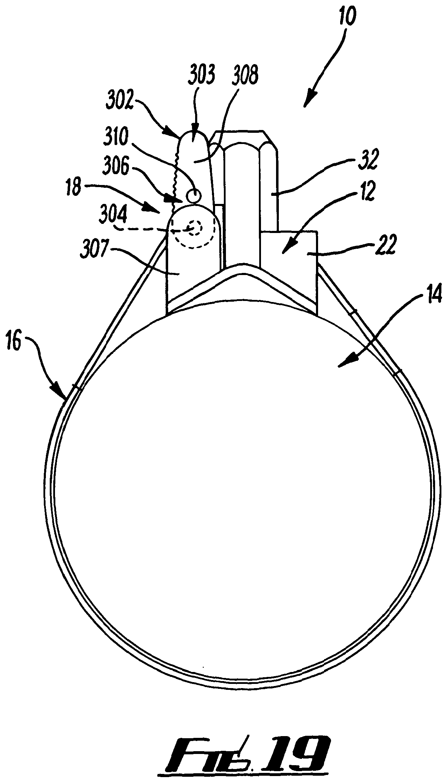

Further modifications are shown in Figures 19 to 26, in which a tightening arrangement is incorporated in the securing apparatus 10, the tightening arrangement being provided to tighten the flexible elongate member 16 after it has been clamped by the clamping arrangement 54. In the embodiment shown, the tightening arrangement is associated with the holding arrangement 18, but it will be appreciated that the tightening arrangement could be separate from the holding arrangement 18.

In some circumstances, the flexible elongate member 16 can be pulled by the weight of the article 14 so that the flexible elongate member 16 is no longer tightly fastened around the article 14. The tightening arrangement is provided to tighten the flexible elongate member 16 in such circumstances.

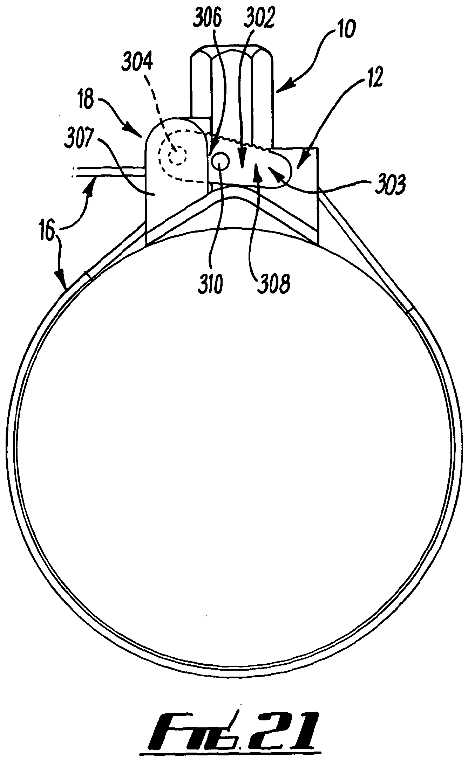

In Figures 19 to 22, the tightening arrangement is in the form of a pivot assembly 302, pivotally mounted on the support arrangement 12 at a pivot 304 (shown in broken lines in Figures 19 to 21). The pivot assembly 302 comprises a tightening member in the form of a lever 303 movable between a released position shown in Figure 19 and a tightened position shown in Figure 21.

The lever 303 comprises a pair of leg members 306 at which the pivot is provided. The pivot 304 comprises a respective pivot member in the form of a projection on the main body 22 on adjacent each leg member 306. Each leg member 306 may define a corresponding aperture or recess to cooperatively receive a respective one of the pivot members. One pivot member is mounted on an upstanding element 307 on the main body 22. The other pivot member is provided on the main body 22 opposite the upstanding element 307. The leg members 306 provide a gap therebetween through which the flexible elongate member can extend.

The lever 303 further includes a lever extension 308 extending from the leg members 306 to facilitate movement of the lever 303 from the released position to the tightened position.

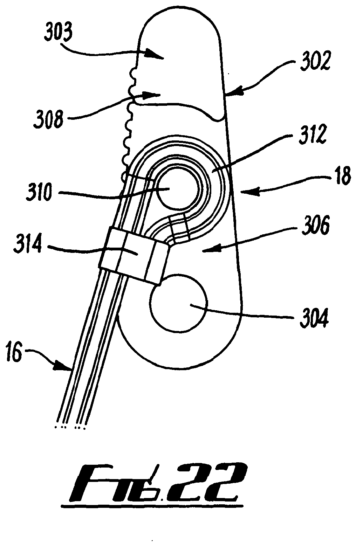

Referring to Figure 22, there is shown a cross-sectional view of the lever 303, so that the attachment of the flexible elongate member 16 to the lever 303 can be seen. The lever 303 includes a pin 310 extending through the lever 303. The end region of the flexible elongate member 16 is formed into a looped region 312, the end of which is fastened back onto the flexible elongate member 16 by a crimped element 314. As can be seen, the looped region 312 extends around the pin 310.

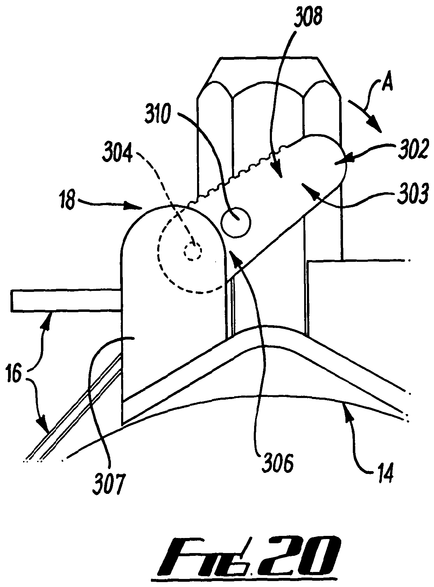

In operation, after the flexible elongate member is fed through, and clamped by, the clamping arrangement 54 so that it is wrapped tightly around the article 14, as described above, and shown in Figures 19 and 20. In the event that the weight of the article 14 pulls the flexible elongate member 16 such that it is no longer tight around the article 14, the pivot assembly 302 can be operated.

The operation of the pivot assembly is effected as follows. The lever 303 is moved from the released position shown in Figure 19, by pivoting the lever 303 about the pivot 304 in the direction indicated by the arrow A in Figure 20, until the lever 303 is in the second, tightened position shown in Figure 21. The pin 310 moves from a position above the pivot 304 in the released position, to a position below the pivot 304 in the tightened position. Thus, in the tightened position the force applied to the lever 303 by the flexible elongate member 16 cannot pull the lever 303 back to the released position.

The distance between the pin 310 and the pivot 304 is selected so that a desired amount of force is required to move the lever 303 from the released position to the tightened position.

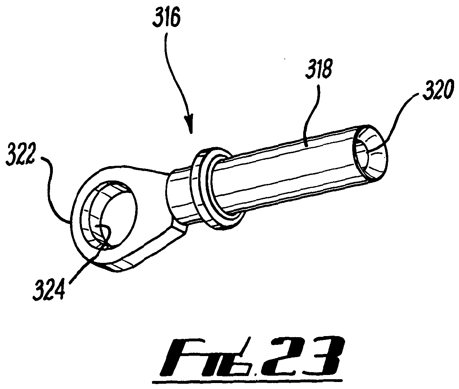

In a modification, the flexible elongate member 16 is secured to the pin 310 by a securing component 316 shown in Figure 23. The securing component comprises a tubular first part 318, defining a cylindrical recess 320 into which the end region of the flexible elongate member 16 can be inserted and attached thereto, for example by swaging, or other suitable means.

The securing component also includes a second part 322 on the first part 318. The second part 322 defines an aperture 324 through which the pin 310 can extend, thereby securing the securing component 316 and the flexible elongate member 16 to the lever 303.

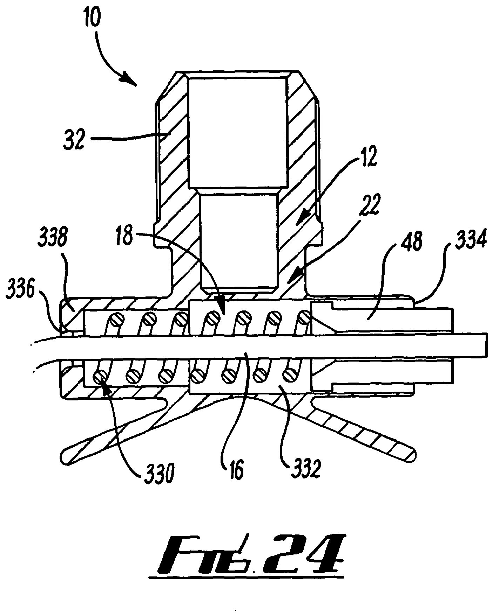

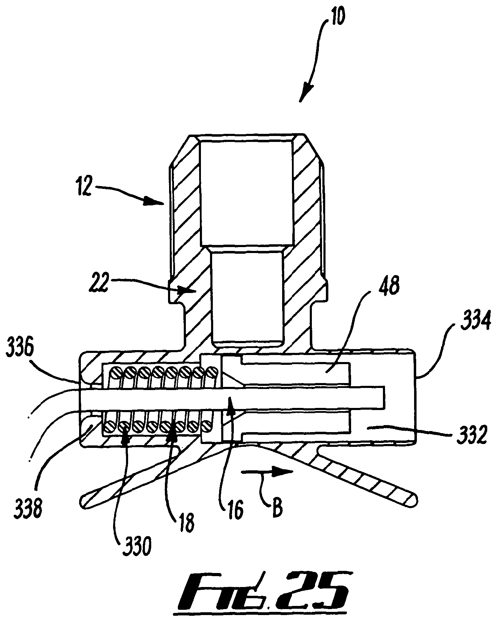

An alternative tightening arrangement is shown in Figures 24 and 25, which comprises a resilient element in the form of a compression spring 330. The compression spring 330 is housed in a chamber 332 in the main body 22.

The chamber 332 has a first opening 334, into which the flexible elongate member can be inserted. The chamber 332 also has a second opening 336, out of which the flexible elongate member 16 can extend.

The chamber 332 has an inwardly extending end wall 338 defining the second opening 336. The compression spring 330 engages the end wall 338.

The end region of the flexible elongate member 16 in the chamber 332 is provided with a ferrule 48, in the same way as described above. The flexible elongate member 16 is wrapped around the article 14 (not shown in Figures 24 and 25), pulled tight against the article 14, and clamped by the clamping arrangement 54 (also not shown in Figures 24 and 25). This causes the ferrule 48 to engage the spring 330 as shown in Figure 24. The spring is thus compressed as shown in Figure 25.

In the event that the weight of the article 14 pulls the flexible elongate member 16, the spring 330 urges the ferrule 48 in the direction indicated by the arrow B in Figure 25 to tighten, or maintain tight, the flexible elongate member 16, thereby ensuring that the flexible elongate member 16 is maintained tight around the article 14.

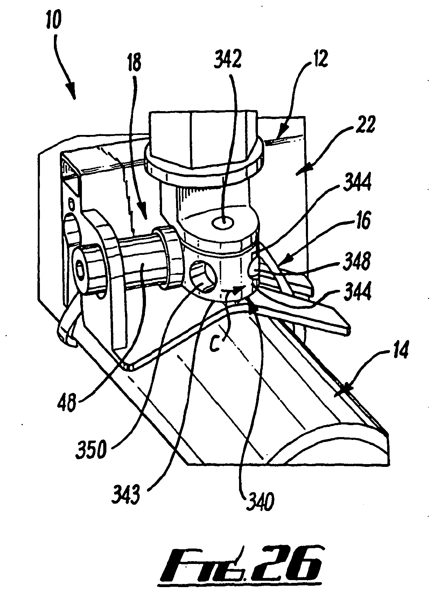

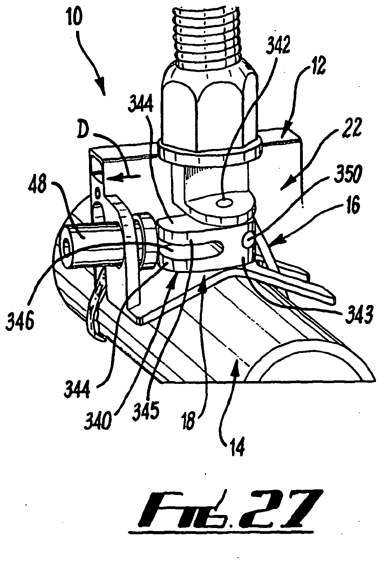

A still further modification of the tightening arrangement is shown in Figures 26, 27, 28A, 28B and 28C, which comprises a cam member 340, and is pivotally mounted on the main body 22 by a pivot 342. As can be seen from Figure 27, the cam member 340 has a main part 343 and an eccentric formation in the form of a pair of forked extensions 344. A gap 346 is provided between the two forked extensions 344, through which the flexible elongate member 16 can extend. Each of the fork extensions has a cam surface 345 to engage the flange 52 on the ferrule 48.

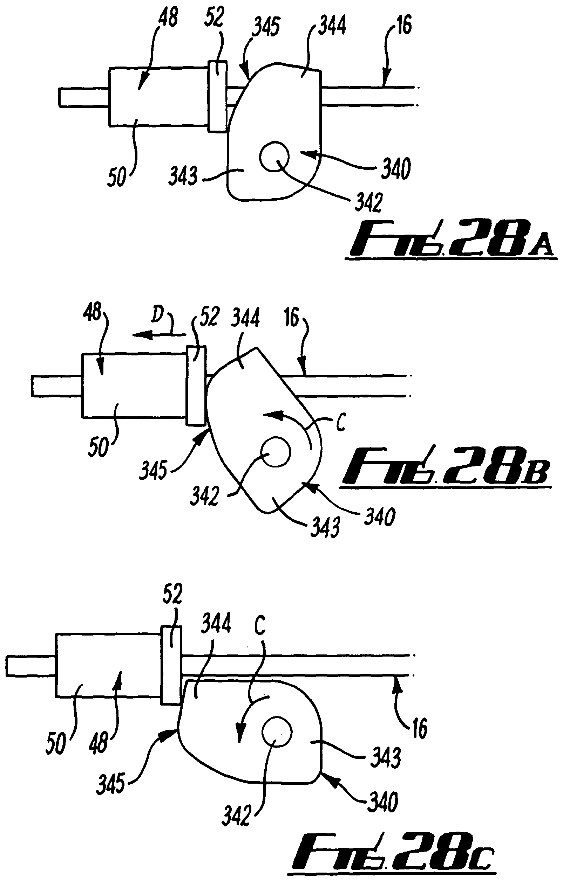

A manipulation hole 350 is defined in the main part 343 of the cam member 340 into which a suitable implement, for example a screwdriver, can be inserted, for the purpose of turning the cam member as indicated by the arrow C in Figure 26, 28B and 28C.

Referring to Figures 28A to 28C, Figure 28A shows the cam member 340 in its released position. In this position, the flange 52 on the ferrule 48 engages the cam surface 345. Figure 28C shows the cam member 340 in its tightened position, and Figure 28B shows the cam member 340 in an intermediate position between the released and tightened positions.

As the cam member 340 is pivotally moved about the pivot 342 from the released to the tightened positions in the direction indicated by the arrow C, the cam surface 345 slides over the flange 52 and pushes the ferrule 48 in the direction indicated by the arrow D in Figure 28B until the cam member 340 reaches the position shown in Figure 28C.

The cam surface 345 is configured such that, when the cam member 340 reaches the position shown in Figure 28C, the shape of the cam surface 345 effects a slight reverse movement of the ferrule 48 in the direction opposite to the indicated by the arrow D, thereby locking the cam member 340 in the tightened position shown in Figure 28C.

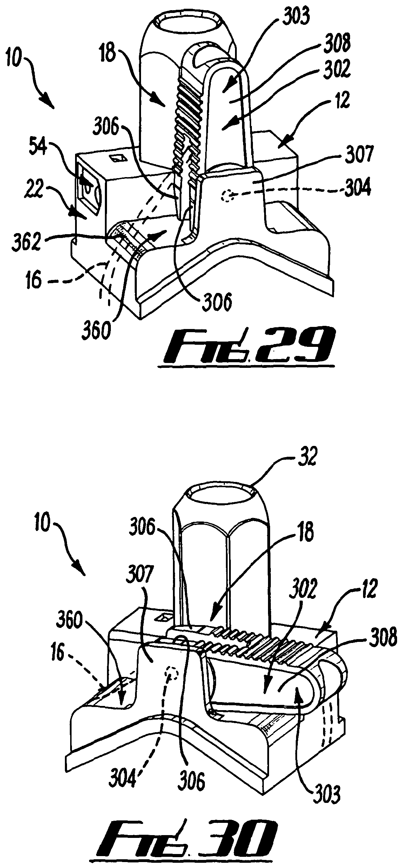

Referring to Figures 29 and 30, there is shown a further embodiment of the suspension apparatus 10. The securing apparatus 10 shown in Figures 29 and 30 is similar to the securing apparatus 10 shown in Figures 19 to 21, and includes the tightening arrangement in the form of the pivot assembly 302.

The pivot assembly 302 shown in Figures 29 and 30 differs from the pivot assembly shown in Figures 19 to 21, in that the pivot assembly 302 in Figures 29 and 30 is centrally mounted on the support arrangement 12.

A further difference is that the support arrangement 12 includes a platform 360 providing a guide means for the flexible elongate member 16 (shown in broken lines in Figures 29 and 30). The guide means comprises a guide surface which, in the embodiment shown, comprises a shoulder 362 on the platform 360. The shoulder 362 is curved, and guides the flexible elongate member 16 from the pivot assembly 302 to the article 14.

The shoulder 360 provides the advantage in this embodiment that, regardless of the size of the article 14 secured by the flexible elongate member 16, the orientation of the portion of the flexible elongate member 16 from the shoulder 362 to the lever 303 is always the same.

Figure 29 shows the lever 303 in the released position, and Figure 30 shows the lever 303 in the tightened position. In the released position, the lever extends transverse to the platform 360. In the tightened position, the lever 303 extends generally parallel to the platform 360.

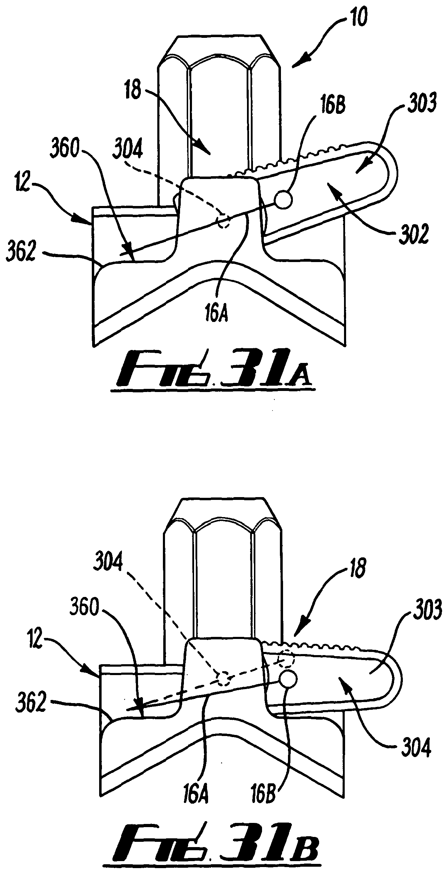

Figures 31A and 31B show the movement of the lever 303 from just before the tightened position (Figure 31A) to the tightened position (Figure 31B). In Figures 31A and 31B, the flexible elongate member 16 is represented by the line 16A, and the attachment of the flexible elongate member 16 to the lever 303 is represented by the circle 16B.

The position of the lever 303 in Figure 31A is such that the flexible elongate member 16, represented by the line 16A, extends through the pivot point 304 to the attachment 16B on the lever 303. This is known as the "top dead centre" position. In this position, the tension in the flexible elongate member 16 is at its maximum.

As the lever 303 is moved past the position shown in Figure 31A to the position shown in Figure 31B, the flexible elongate member 16, represented by the line 16A, is no longer aligned with the pivot point 304 and is, therefore, at slightly less tension than the tension in the flexible elongate member 16 in the position shown in Figure 31A. The position of the flexible elongate member in Figure 31A is shown in broken lines in Figure 31B.

Thus, in order for the flexible elongate member to be released from its tightened position shown in Figure 31B, it is necessary to increase the tension in the flexible elongate member 16 to move it past of the top dead centre position shown in Figure 31A. Therefore, when the flexible elongate member 16 is in the position shown in Figure 31B, there is a degree of locking the flexible elongate member 16 in that position.

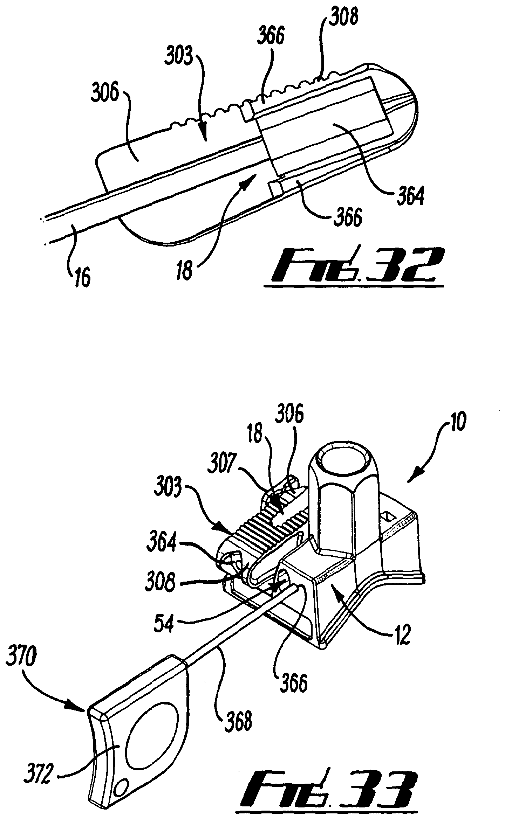

Figure 32 shows a sectional side view of the lever 303, showing the flexible elongate member 16 attached thereto. A ferrule 364 is provided at the end of the flexible elongate member 16, and the ferrule 364 is held in the lever 303 by attaching formations 366 in the lever 303. The ferrule 364 is crimped onto the end of the flexible elongate member 16, thereby securing it thereto.

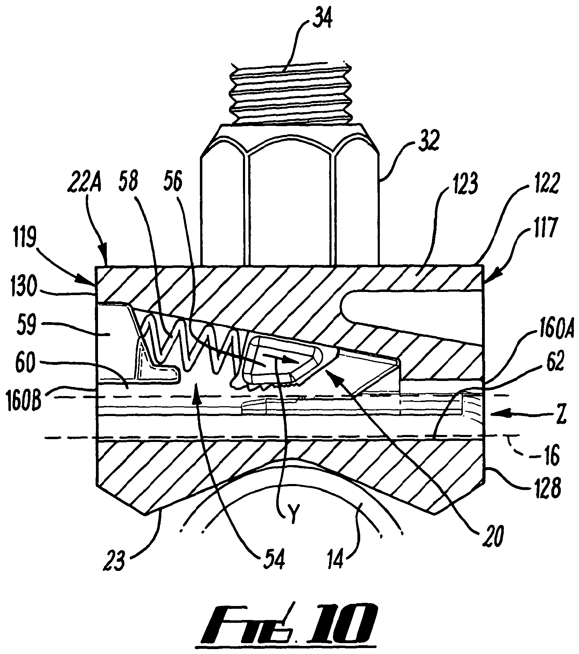

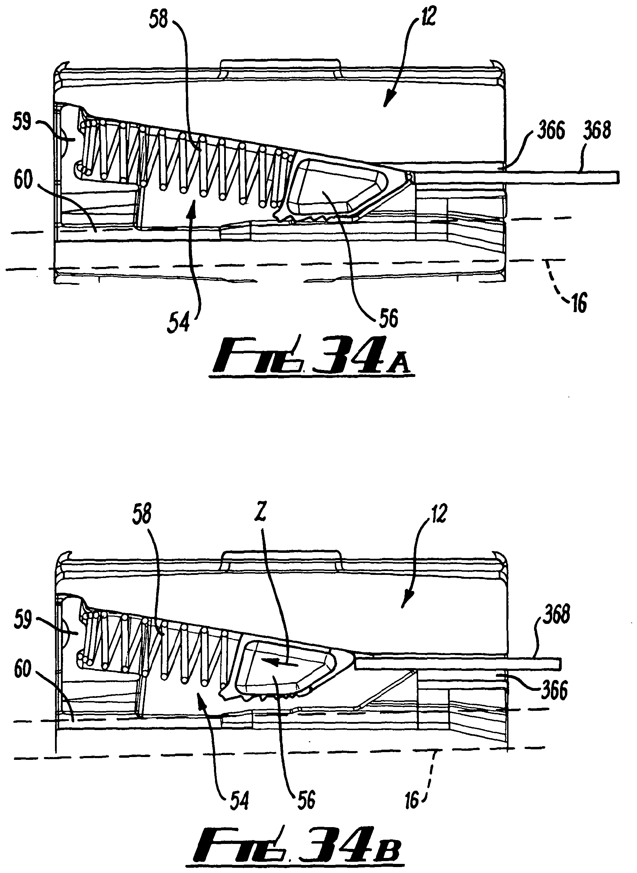

In Figure 33, there is shown the same securing apparatus 10, as shown in Figures 29 and 30, and in which a clamping arrangement 54 is provided. The clamping arrangement 54 is shown in more detail in Figures 34A and 34B, and is generally the same as the clamping arrangement 54 described above with reference to Figure 10. The features of the clamping arrangement 54 shown in Figures 34A and 34B, which are the same as those shown in Figure 10 have been designated with the same reference numerals as in Figure 10.

The clamping arrangement 54 shown in Figures 33, 34A and 34B differs from the clamping arrangement 54 is shown in Figure 10, in that the support arrangement 12 defines an aperture 366 which extends from the outside of the support arrangement 12 to the clamping arrangement 54, so that an elongate insertion portion 368 of a disengagement tool 370 can be inserted therein to disengage the wedge 56 from engagement with the flexible elongate member 16 (shown in broken lines in Figures 34A and 34B).

Figure 33 shows the disengagement tool 370, which comprises a handle 372 and the elongate insertion member 368 extending outwardly from the handle 372.

In Figure 34A, the wedge 56 is held by the spring 58 in clamping engagement with the flexible elongate member 16. In order to the disengage the wedge 56 from the flexible elongate member 16, for example, if it is designed to adjust the position of the flexible elongate member 16, the insertion portion 368 is inserted into the aperture 366 to engage the wedge 56, and to push the wedge 56 in the direction indicated by the arrow Z away from the flexible elongate member 16, to allow it to be adjusted.

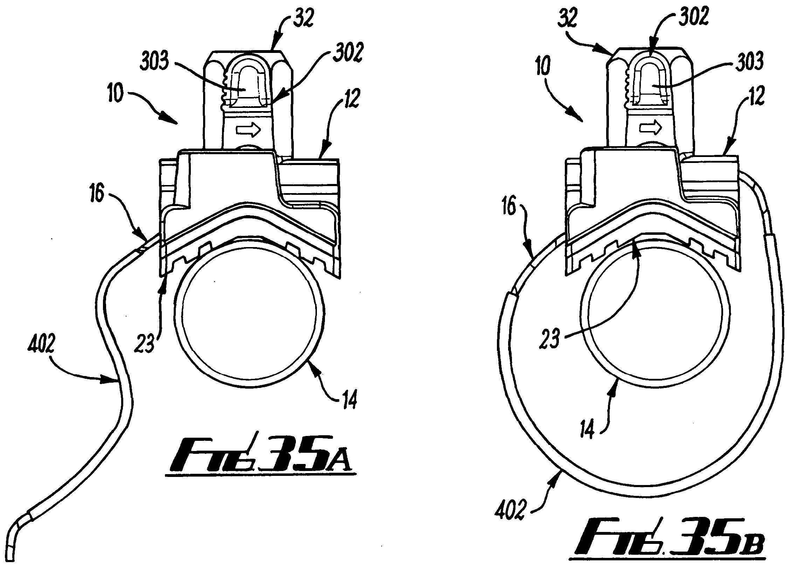

Figures 35A to 35C show a securing apparatus 10 which is generally the same as the securing apparatus 10 shown in Figure 29. Insulation 403 is mounted on the flexible elongate member 16 on the region thereof that engages the article 14.

The insulation 402 comprises a sleeve 404 formed of a compressible fabric material. Figures 35A to 35C show the steps in securing the article 14 to the securing apparatus 10. In Figure 35A, the article 14 is engaged against the article engaging portion 23. The flexible elongate member 16 is then fed into the clamping arrangement 54, as shown in Figure 35B.

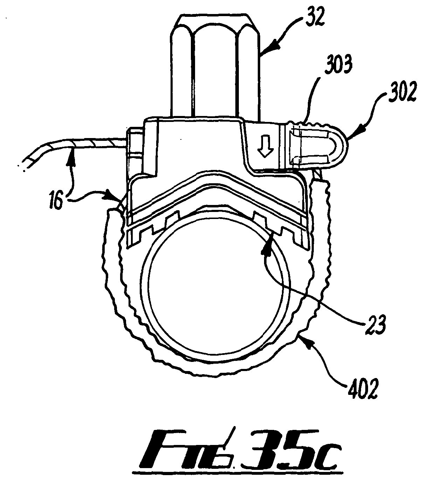

The flexible elongate member16 is the pulled through the clamping arrangement 54 and hence pulled tight around the article 14. This results in the sleeve 404 being compressed to the condition shown in Figure 35C.

Thus, a single size of sleeve 404 can be used to provide insulation for articles 14 of a plurality of different sizes.

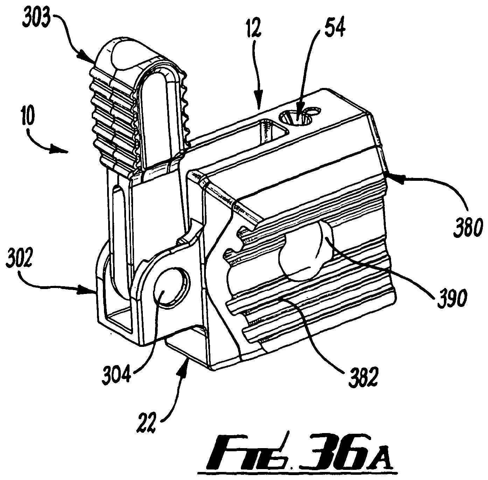

Figures 36A to 36D show a further embodiment of the securing apparatus 10, in which the pivot assembly 302 is mounted on the main body 22 of the support arrangement 12. The lever 303 pivots in a plane that is substantially parallel to the main axis A - A of the article 14.

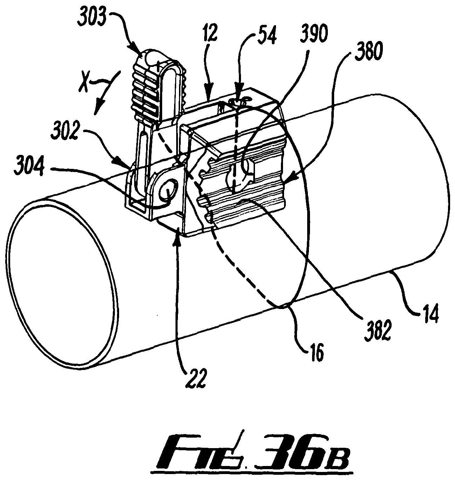

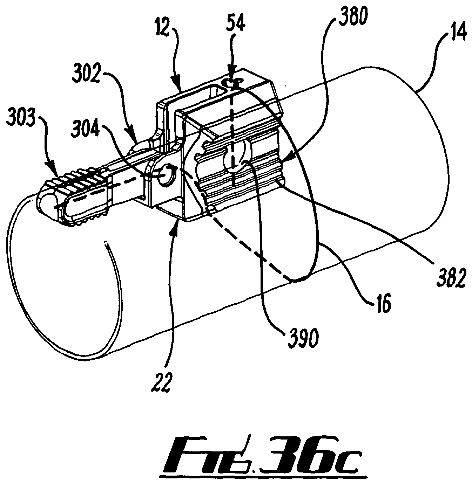

Reference is now made specifically to Figures 36B and 36C. The clamping arrangement 54 is within the main body 22, and the flexible elongate member 16 is secured around the article 14. The lever 303 is then pivoted about the pivot 304, from the released position, shown in Figure 36B, in the direction indicated by the arrow X. The lever 303 is continued to be moved about the pivot 304 until the lever 303 reaches the tightened position, as shown in Figure 36C in which it is hidden behind the article 14. This has the advantage that the securing apparatus 10, shown in Figures 36A to 36D is not only aesthetically pleasing, but the lever 303 is less likely to be dislodged from its tightened position.

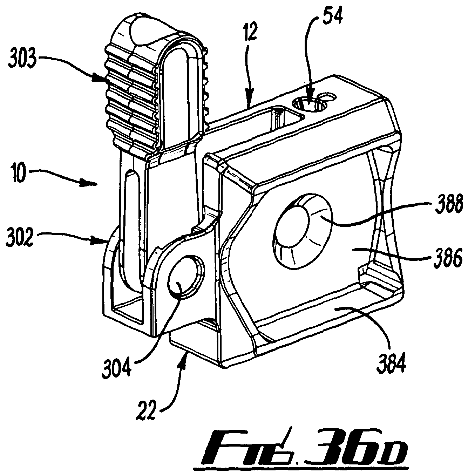

The securing apparatus 10 shown in Figures 36A to 36D includes a resilient member 380 to engage the article 14. The resilient member 380 has a generally V-shaped engaging face 382 to engage the article, and an insertion portion which can be received in a recess 384 defined in the main body 22 (see Figure 36D). The insertion portion is not shown in Figures 36A to 36C, but is the same as the insertion portion 504 described below. The insertion portion attaches the resilient member 380 to the main body 22 of the securing apparatus 10.

Figure 36D shows the securing apparatus 10 without the resilient member 380, so that the recess 384 can be seen. The main body 22 has a flat face 386 defining a fastening aperture 388 extending through the main body 22. A screw (not shown) can be inserted through the fastening aperture 388 to fasten the apparatus 10 to a support, for example a wall (not shown).

As can be seen from Figure 36A, the resilient member 380 defines a through aperture 390. When the resilient member is attached to the main body 22, the through aperture 390 in the resilient member 380 is aligned with the fastening aperture 388 so that a screw can be inserted via the through aperture 390 into the fastening aperture 388, to allow the securing apparatus 10 to be fastened to a support without the need to remove the resilient member 380.

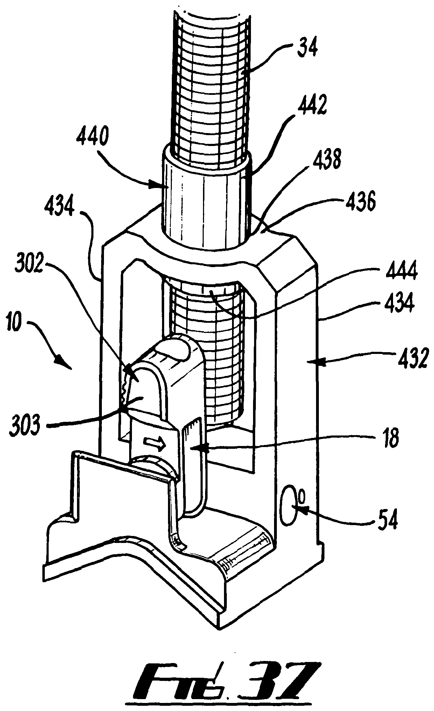

Figure 37 shows a further embodiment of the securing apparatus 10, in which the fastening formation 32 is in the form of a bridge element 432, comprising first and second support members 434 and a connecting member 436 extending between the support members 434 to connect them to each other. The connecting member 436 defines an aperture 438 in which a cylindrical adjustment member 440 is received.

The adjustment member 440 comprises a main portion 442 and a radially outwardly extending flange portion 444. The main portion 442 extends through the aperture 438, and the flange portion engages the connecting element 436.

The main portion 442 is internally threaded so that it can threadably receive the threaded bar 34. Thus, by adjusting the position of the adjustment member 440 on the threaded bar 34, the position of the securing apparatus 10 thereon is also adjusted.

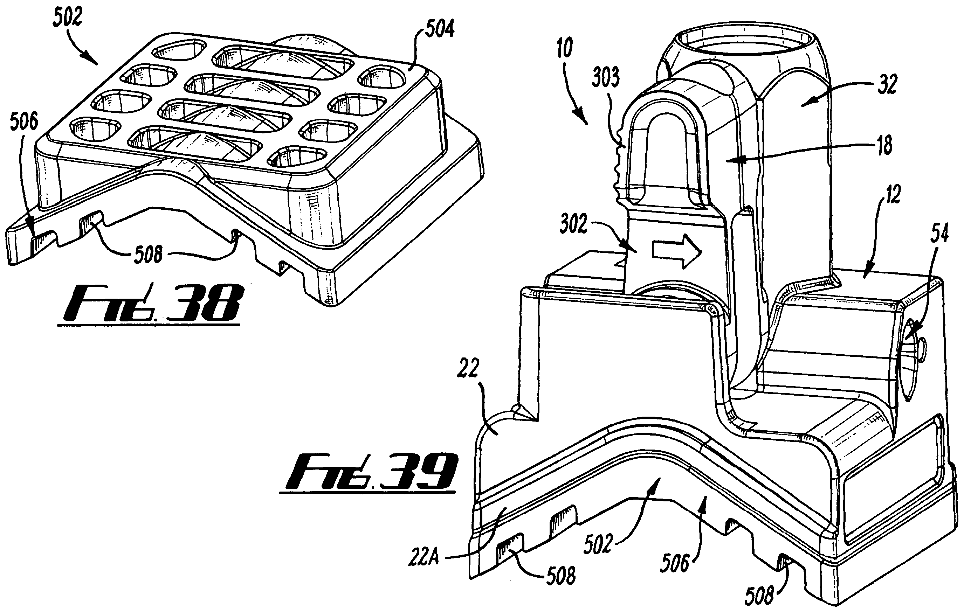

Figures 38 and 39 show a resilient member 502, which is similar to the resilient members 202 and 380 shown in Figures 17 and 36A to 36C. The resilient member 502 comprises an insertion portion 504 of a generally rectangular configuration, and an engagement portion 506 for engaging the article 14.

The engagement portion 506 has a generally V-shaped profile and has castellations 508 to provide enhanced grip on the article 14.

The insertion portion 504 is of a suitable size and shape to be tightly received within a recess defined in a lower region of the main body 22, thereby attaching the resilient member 502 to the main body 22. The aforesaid lower region also has a V-shaped profile to accommodate the V-shaped profile of the engagement portion 506 of the resilient member 502.

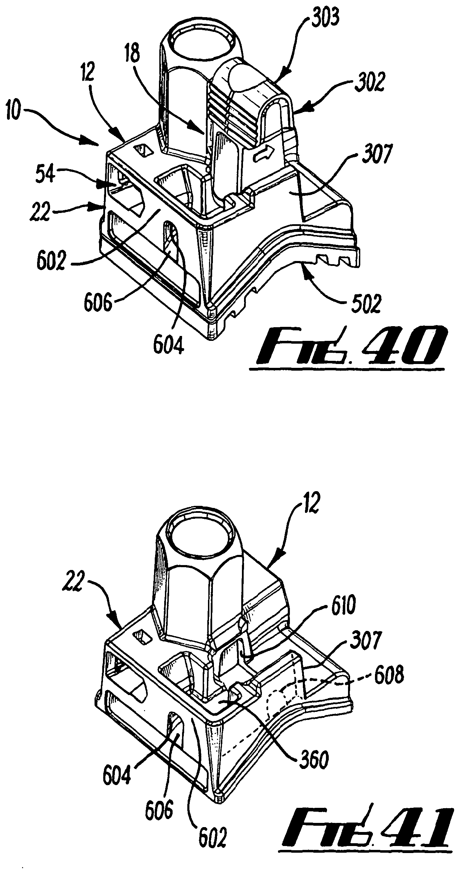

Reference is now made to Figures 40 and 41, which shows another embodiment, in which a wall member 602 extends across the platform 360. The wall member 602 defines a guide aperture 604, through which the flexible elongate member 16 can extend. The guide aperture 604 is defined partially by a guide surface which, in the embodiment shown comprises a curved shoulder 606.

The curved shoulder 606 is provided on the platform 360 and, in use, the flexible elongate member extends through the guide aperture 604, and engages the curved shoulder 606.

Thus, the guide aperture 604 guides the flexible elongate member 16 from the first holding arrangement 18 to the article 14, and prevents inadvertent dislodging of the flexible elongate member 16. This feature can be an advantage in the embodiment described, by increasing the ease of installation in places that are difficult to access.

Figure 41 shows a similar view of the embodiment shown in Figure 40, but with the lever 303 omitted. As can be seen, the upstanding element 307 defines a recess 608 and the main body 22 defines a further recess 610 opposite the recess 608. The recesses 608, 610 can receive projections on the leg members 306 to provide the pivot 304 for the lever 303.

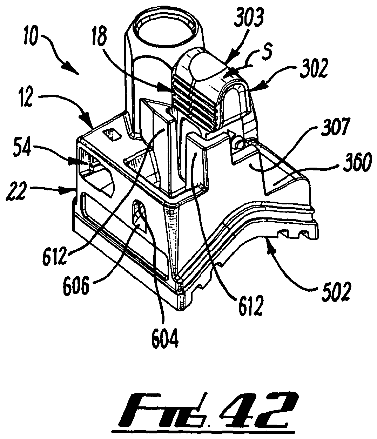

Figure 42 shows a variation of the embodiment shown in Figures 40 and 41, in which stop members 612 are provided. In Figure 42, the lever 303 is shown in the released condition extending transverse to the platform 360. The stop members 612 prevent movement of the lever 303 in the direction of the arrow S beyond the released position. This provides an advantage in this embodiment in that by preventing inadvertent forcing of the lever 303 beyond the released condition, dislocation of the lever 303 from the recesses 608, 610 (not visible in Figure 42) is prevented.

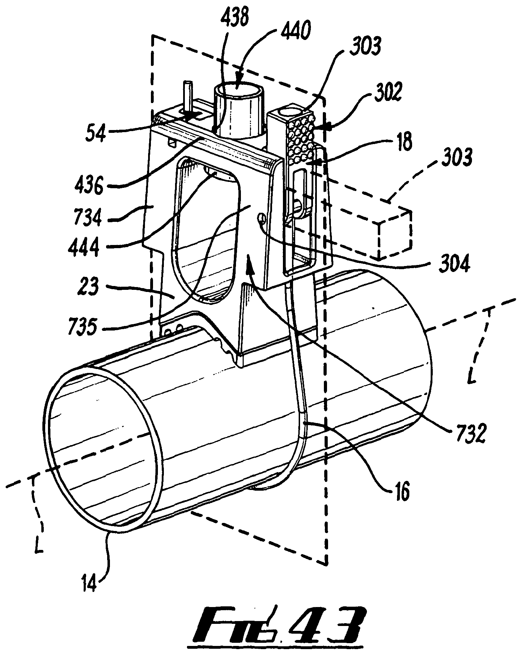

Figure 43 shows yet another embodiment, which is similar to the embodiment shown in Figure 37, and comprises many of the features of that embodiment. The features of Figure 43, which are also present in Figure 37, are designated with the same reference numerals as in Figure 37.

The embodiment shown in Figure 43 includes an article engaging portion 23, on which a bridge element 732 is provided. The bridge element 732 comprises first and second support members 734, 735 and the connecting member 436 which connects the first and second support members 734, 735 to each other.

The first and second support members 734, 735 differ from the first and second support members 434, as shown in Figure 37 as follows.

The first support member 734 comprises a clamping arrangement 54 to clamp the flexible elongate member 16. The clamping arrangement 54 in the embodiment shown in Figure 43 has the features of the clamping arrangement 54 shown in some of the previous drawings and described above. In addition, the second support member 735 constitutes a tightening arrangement in the form of a pivot assembly 302 to tighten the flexible elongate member.

The pivot assembly 302 has the features of the pivot assembly 302 shown in some of the previous drawings and described above. In particular, the pivot assembly 302 includes a lever 303, which is movable between released and tightened positions in the same way as described above. The lever 303 is shown in Figure 43 in broken lines in the released position and in solid lines in the tightened position.

Figure 43 shows a plane P, which extends through the clamping arrangement 54 and the pivot assembly 302. The plane P also extends through the flexible elongate member 16 when the flexible elongate member 16 is arranged tightly around the article 14. The article 14 has a longitudinal main axis L, and when the article 14 is secured by the flexible elongate member 16 in engagement with the article engaging portion 23, the main axis L is perpendicular to the plane P. This ensures that the tightening of the flexible elongate member 16 onto the article 14 does not cause the article 14 to twist relative to the article engaging portion 23.

One advantage of the securing apparatus described herein is that the use of a flexible elongate member in the form of a wire rope or a cable significantly reduces vibration and noise by up to 70% compared to prior art pipe clamps.

## Claims

1. Securing apparatus (10) comprising a support arrangement (12) to support an article (14), a flexible elongate member (16) in the form of a wire, cable, rope, wire rope, or strand, and first and second cooperating arrangements to cooperate with the flexible elongate member (16), wherein the first cooperating arrangement comprises a clamping arrangement (54) to clamp the flexible elongate member (16), and the second cooperating arrangement comprises a tightening arrangement (302) to tighten the flexible elongate member (16) when clamped by the clamping arrangement (54), wherein the flexible elongate member (16) can be disposed in a securing position extending from the clamping arrangement (54) across the article (14) thereby to secure the article (14) in engagement with the support arrangement (12), wherein the clamping arrangement (54) defines a passage (60) for the flexible elongate member (16), the passage (60) having opposed openings (31, 60A) so that the flexible elongate member (16) can extend through the passage (60), and wherein the clamping arrangement (54) includes a clamping member (56) and urging means (58) to urge the clamping member (56) towards the passage (60) to engage the flexible elongate member (16) and clamp the flexible elongate member (16) in the passage (60), **characterised in that** the tightening arrangement (302) comprises a pivot assembly, which is pivotally mounted on the support arrangement (12), and is pivotally movable between a released position and a tightened position.

2. Securing apparatus according to Claim 1, wherein the tightening arrangement (302) is movable between the tightened position to tighten the flexible elongate member (16) against the article (14) when the flexible elongate member (16) is in its securing position, and the released position in which the flexible elongate member (16) is loosened from the tightened position.

3. Securing apparatus according to Claim 2, wherein, the pivot assembly comprises a lever (303) pivotally movable between the released and the tightened positions, the flexible elongate member (16) being attached to the lever (303), and the pivot assembly further including a pivot (304) to pivotally attach the lever (303) to the support arrangement (12).

4. Securing apparatus according to Claim 3, wherein the lever (303) comprises a pair of leg members (306) between which the flexible elongate member (16) can extend, the pivot (304) comprising a respective pivot member at each leg member (306).

5. Securing apparatus according to any preceding Claim, wherein the support arrangement (12) includes a guide to guide the flexible elongate member (16) from the tightening arrangement (302) to the article (14), the guide comprising a guide surface (362) on the support arrangement (12), the guide surface (362) having a curved face to engage the flexible elongate member (16).

6. Securing apparatus according to any preceding Claim, wherein the support arrangement (12) includes a main body (22) and an article engaging portion (23) at which the support arrangement (12) can engage the article (14), the article engaging portion (23) having first and second engaging portions (24, 26) extending in opposite directions on the main body (22), the article engaging portion (23) having a substantially V-shaped profile, a first part of the V comprising the first engaging portion, and a second part of the V comprising the second engaging portion.

7. Securing apparatus according to any preceding Claim, wherein the apparatus includes disengagement means (370) to disengage the clamping member (56) from engagement with the flexible elongate member (16), the disengagement means (370) comprising a tool having an elongate insertion portion (368), to be inserted into the support arrangement (12) to engage the clamping member (56) and disengage the clamping member (56) from engagement with the flexible elongate member (16), and the support arrangement (12) defines an access aperture (366) to provide access to the clamping member (56) by the insertion portion (368), the insertion portion (368) being insertable into the access aperture (366) to engage the clamping member (56).

8. Securing apparatus according to any preceding Claim, including protective means mountable on the flexible elongate member (16) to provide protection thereto, the protective means comprising a compressible sleeve (404) on the flexible elongate member (16), the sleeve (404) being compressed when the flexible elongate member (16) is pulled through the clamping arrangement (54).

9. A method of securing an article (14), said method comprising providing a securing apparatus (10) having a support arrangement (12), a first cooperating arrangement comprising a clamping arrangement (54), and a second cooperating arrangement comprising a tightening arrangement (302), wherein the method comprises arranging a flexible elongate member (16) in the form of wire, cable, rope, wire rope, or strand in a securing position across the article (14) between the first and second cooperating arrangements, clamping the flexible elongate member (16) at the clamping arrangement (54), and effecting tightening of the flexible elongate member (16) against the article (14) with the tightening arrangement (302), wherein the clamping arrangement (54) defines a passage (60) for the flexible elongate member (16), the passage (60) having opposed openings (31, 60A), and the step of arranging the flexible elongate member (16) in the securing position comprises arranging the flexible elongate to extend through the passage (60), and wherein the clamping arrangement (54) further includes a clamping member (56) and urging means (58) to urge the clamping member (56) towards the passage (60), and the step of clamping the flexible elongate member (16) comprises urging the clamping member (56) towards the passage (60) to engage the flexible elongate member (16) and clamp the flexible elongate member (16) in the passage (60), **characterised in that** the tightening arrangement (302) comprises a pivot assembly, and the step of tightening the flexible elongate member (16) includes pivotally moving the tightening arrangement (302) between a released position and a tightened position.

10. A method according to Claim 9, wherein the pivot assembly comprises a lever (303), and the step of moving the tightening arrangement (302) between the released and tightened positions comprises pivotally moving the lever between the released and tightened positions.

11. A method according to Claim 9 or 10, wherein the step of arranging the flexible elongate member (16) in the securing position comprises extending the flexible elongate member (16) from the first cooperating arrangement to the second cooperating arrangement to provide a securing portion of the flexible elongate member (16) extending across the article (14), and the step of tightening the flexible elongate member (16) comprises moving the pivot assembly in a direction that is generally transverse to a plane defined by the securing portion.

12. A method according to claim 9, 10 or 11, wherein the clamping arrangement (54) includes urging means (58) to urge the clamping member (56) towards the passage (60), and the step of arranging the flexible elongate member (16) in the securing position comprises inserting the flexible elongate member (16) into the passage (60), and pulling the flexible elongate member (16) so that the urging means (58) can urge the clamping member (56) in the direction of the flexible elongate member (16), whereby the clamping member (56) engages the flexible elongate member (16) and clamps the flexible elongate member (16) in the passage (60).

## Patentansprüche

1. Befestigungsvorrichtung (10), umfassend eine Stützanordnung (12) zum Stützen eines Artikels (14), ein flexibles längliches Element (16) in Form eines Drahts, Kabels, Seils, Drahtseils oder Strangs, und eine erste und zweite zusammenwirkende Anordnung zum Zusammenwirken mit dem flexiblen länglichen Element (16), wobei die erste zusammenwirkende Anordnung eine Klemmanordnung (54) zum Klemmen des flexiblen länglichen Elements (16) und die zweite zusammenwirkende Anordnung eine Spannanordnung (302) zum Spannen des flexiblen länglichen Elements (16), wenn es von der Klemmanordnung (54) geklemmt wird, umfasst, wobei das flexible längliche Element (16) in einer sich von der Klemmanordnung (54) über den Artikel (14) erstreckenden Befestigungsposition angeordnet werden kann, um so den Artikel (14) im Eingriff mit der Stützanordnung (12) zu befestigen, wobei die Klemmanordnung (54) einen Durchgang (60) für das flexible längliche Element (16) definiert, wobei der Durchgang (60) gegenüberliegende Öffnungen (31, 60A) aufweist, so dass sich das flexible längliche Element (16) durch den Durchgang (60) erstrecken kann, und wobei die Klemmanordnung (54) ein Klemmelement (56) und ein Druckmittel (58) enthält, um das Klemmelement (56) zum Durchgang (60) zu drücken, um das flexible längliche Element (16) in Eingriff zu nehmen und das flexible längliche Element (16) in den Durchgang (60) zu klemmen, **dadurch gekennzeichnet, dass** die Spannanordnung (302) eine Schwenkanordnung umfasst, die schwenkend an der Stützanordnung (12) befestigt ist und zwischen einer freigegebenen Position und einer gespannten Position schwenkend bewegt werden kann.

2. Befestigungsvorrichtung nach Anspruch 1, wobei die Spannanordnung (302) zwischen der gespannten Position, um das flexible längliche Element (16) gegen den Artikel (14) anzuziehen, wenn das flexible längliche Element (16) in seiner Befestigungsposition ist, und der freigegebenen Position, in der das flexible längliche Element (16) von der gespannten Position gelockert ist, bewegt werden kann.

3. Befestigungsvorrichtung nach Anspruch 2, wobei die Schwenkanordnung einen Hebel (303) umfasst, der zwischen der freigegebenen und der gespannten Position schwenkend bewegt werden kann, wobei das flexible längliche Element (16) am Hebel (303) angebracht ist und die Schwenkanordnung ferner einen Drehzapfen (304) enthält, um den Hebel (303) schwenkend an der Stützanordnung (12) anzubringen.

4. Befestigungsvorrichtung nach Anspruch 3, wobei der Hebel (303) ein Paar Schenkelelemente (306) umfasst, zwischen denen sich das flexible längliche Element (16) erstrecken kann, wobei der Drehzapfen (304) ein jeweiliges Schwenkelement an jedem Schenkelelement (306) umfasst.

5. Befestigungsvorrichtung nach einem der vorstehenden Ansprüche, wobei die Stützanordnung (12) eine Führung zum Führen des flexiblen länglichen Elements (16) von der Spannanordnung (302) zum Artikel (14) enthält, wobei die Führung eine Führungsfläche (362) an der Stützanordnung (12) enthält, wobei die Führungsfläche (362) eine gekrümmte Fläche aufweist, um das flexible längliche Element (16) in Eingriff zu nehmen.

6. Befestigungsvorrichtung nach einem der vorstehenden Ansprüche, wobei die Stützanordnung (12) einen Hauptkörper (22) und einen den Artikel in Eingriff nehmenden Abschnitt (23) enthält, an dem die Stützanordnung (12) den Artikel (14) in Eingriff nehmen kann, wobei der den Artikel in Eingriff nehmende Abschnitt (23) einen ersten und zweiten in Eingriff nehmenden Abschnitt (24, 26) aufweist, die sich in entgegengesetzte Richtungen am Hauptkörper (22) erstrecken, wobei der den Artikel in Eingriff nehmende Abschnitt (23) ein im Wesentlichen V-förmiges Profil aufweist, wobei ein erster Teil des V den ersten in Eingriff nehmenden Abschnitt umfasst und ein zweiter Teil des V den zweiten in Eingriff nehmenden Abschnitt umfasst.

7. Befestigungsvorrichtung nach einem der vorstehenden Ansprüche, wobei die Vorrichtung Lösemittel (370) enthält, um das Klemmelement (56) aus dem Eingriff mit dem flexiblen länglichen Element (16) zu lösen, wobei die Lösemittel (370) ein Werkzeug mit einem länglichen Einführabschnitt (368) zum Einführen in die Stützanordnung (12) umfassen, um das Klemmelement (56) in Eingriff zu nehmen und das Klemmelement (56) aus dem Eingriff mit dem flexiblen länglichen Element (16) zu lösen, und die Stützanordnung (12) eine Zugriffsöffnung (366) definiert, um Zugriff durch den Einführabschnitt (368) auf das Klemmelement (56) bereitzustellen, wobei der Einführabschnitt (368) in die Zugriffsöffnung (366) eingeführt werden kann, um das Klemmelement (56) in Eingriff zu nehmen.

8. Befestigungsvorrichtung nach einem der vorstehenden Ansprüche, enthaltend Schutzmittel, die am flexiblen länglichen Element (16) angebracht werden können, um dieses zu schützen, wobei die Schutzmittel eine komprimierbare Hülle (404) am flexiblen länglichen Element (16) umfassen, wobei die Hülle (404) komprimiert wird, wenn das flexible längliche Element (16) durch die Klemmanordnung (54) gezogen wird.

9. Verfahren zum Befestigen eines Artikels (14), wobei das Verfahren das Bereitstellen einer Befestigungsvorrichtung (10) mit einer Stützanordnung (12), einer ersten zusammenwirkenden Anordnung, umfassend eine Klemmanordnung (54) und eine zweite zusammenwirkende Anordnung, umfassend eine Spannanordnung (302) umfasst, wobei das Verfahren das Anordnen eines flexiblen länglichen Elements (16) in Form eines Drahts, Kabels, Seils, Drahtseils oder Strangs in einer Befestigungsposition über den Artikel (14) zwischen der ersten und zweiten zusammenwirkenden Anordnung, das Klemmen des flexiblen länglichen Elements (16) an der Klemmanordnung (54) und das Bewirken eines Spannens des flexiblen länglichen Elements (16) gegen den Artikel (14) mit der Klemmanordnung (302) umfasst, wobei die Klemmanordnung (54) einen Durchgang (60) für das flexible längliche Element (16) definiert, wobei der Durchgang (60) gegenüberliegende Öffnungen (31, 60A) aufweist und der Schritt des Anordnens des flexiblen länglichen Elements (16) in der Befestigungsposition das Anordnen des flexiblen länglichen Elements, so dass sich durch den Durchgang (60) erstreckt, umfasst, und wobei die Klemmanordnung (54) ferner ein Klemmelement (56) und Druckmittel (58) zum Drücken des Klemmelements (56) zum Durchgang (60) enthält und der Schritt des Klemmens des flexiblen länglichen Elements (16) das Drücken des Klemmelements (56) zum Durchgang (60), um das flexible längliche Element (16) in Eingriff zu nehmen und das flexible längliche Element (16) in den Druchgang (60) zu drücken, umfasst, **dadurch gekennzeichnet, dass** die Spannanordnung (302) eine Schwenkanordnung umfasst und der Schritt des Spannens des flexiblen länglichen Elements (16) das schwenkende Bewegen der Spannanordnung (302) zwischen einer freigegebenen Position und einer gespannten Position enthält.

10. Verfahren nach Anspruch 9, wobei die Schwenkanordnung einen Hebel (303) umfasst und der Schritt des Bewegens der Spannanordnung (302) zwischen der freigegebenen und der gespannten Position das schwenkende Bewegen des Hebels zwischen der freigegebenen und der angezogenen Position umfasst.

11. Verfahren nach Anspruch 9 oder 10, wobei der Schritt des Anordnens des flexiblen länglichen Elements (16) in der Befestigungsposition das Ausdehnen des flexiblen länglichen Elements (16) von der ersten zusammenwirkenden Anordnung zur zweiten zusammenwirkenden Anordnung umfasst, um einen Befestigungsabschnitt des flexiblen länglichen Elements (16) bereitzustellen, der sich über den Artikel (14) erstreckt, und der Schritt des Spannens des flexiblen länglichen Elements (16) das Bewegen der Schwenkanordnung in eine Richtung, die allgemein quer zu einer durch den Befestigungsabschnitt definierten Ebene ist, umfasst.

12. Verfahren nach einem der Ansprüche 9, 10 oder 11, wobei die Klemmanordnung (54) Druckmittel (58) zum Drücken des Klemmelements (56) zum Durchgang (60) enthält und der Schritt des Anordnens des flexiblen länglichen Elements (16) in der Befestigungsposition das Einführen des flexiblen länglichen Elements (16) in den Durchgang (60) und das Ziehen des flexiblen länglichen Elements (16) umfasst, so dass die Druckmittel (58) das Klemmelement (56) in die Richtung des flexiblen länglichen Elements (16) drücken können, wodurch das Klemmelement (56) das flexible längliche Element (16) in Eingriff nimmt und das flexible längliche Element (16) in den Durchgang (60) klemmt.

## Revendications

1. Appareil de blocage (10) comprenant un agencement de support (12) destiné à supporter un article (14), un élément allongé flexible (16) en forme de fil, câble, filin, fil métallique ou toron, et des premier et deuxième agencements de coopération destinés à coopérer avec l'élément allongé flexible (16), dans lequel le premier agencement de coopération comprend un agencement de serrage (54) destiné à serrer l'élément allongé flexible (16), et le deuxième agencement de coopération comprend un agencement de resserrage (302) destiné à resserrer l'élément allongé flexible (16) lorsqu'il est serré par l'agencement de serrage (54), dans lequel l'élément allongé flexible (16) peut être disposé dans une position de blocage s'étendant depuis l'agencement de serrage (54) et traversant l'article (14) pour de la sorte bloquer l'article (14) en solidarisation avec l'agencement de support (12), dans lequel l'agencement de serrage (54) définit un passage (60) pour l'élément allongé flexible (16), le passage (60) ayant des ouvertures opposées (31, 60A) de sorte que l'élément allongé flexible (16) peut s'étendre à travers le passage (60), et dans lequel l'agencement de serrage (54) inclut un élément de serrage (56) et un moyen de poussée (58) destiné à pousser l'élément de serrage (56) en direction du passage (60) pour solidariser l'élément allongé flexible (16) et serrer l'élément allongé flexible (16) dans le passage (60), **caractérisé en ce que** l'agencement de resserrage (302) comprend un ensemble pivot, qui est monté de manière pivotante sur l'agencement de support (12), et est mobile de manière pivotante entre une position relâchée et une position resserrée.

2. Appareil de blocage selon la revendication 1, dans lequel l'agencement de resserrage (302) est mobile entre la position resserrée pour resserrer l'élément allongé flexible (16) contre l'article (14) quand l'élément allongé flexible (16) est dans sa position de blocage, et la position relâchée dans laquelle l'élément allongé flexible (16) est desserré de la position resserrée.

3. Appareil de blocage selon la revendication 2, dans lequel l'ensemble pivot comprend un levier (303) mobile de manière pivotante entre les positions relâchée et resserrée, l'élément allongé flexible (16) étant attaché au levier (303), et l'ensemble pivot incluant en outre un pivot (304) destiné à attacher de manière pivotante le levier (303) à l'agencement de support (12).

4. Appareil de blocage selon la revendication 3, dans lequel le levier (303) comprend une paire d'éléments de pattes (306) entre lesquels l'élément allongé flexible (16) peut s'étendre, le pivot (304) comprenant un élément pivot respectif au niveau de chaque élément de patte (306).

5. Appareil de blocage selon l'une quelconque des revendications précédentes, dans lequel l'agencement de support (12) inclut un guide destiné à guider l'élément allongé flexible (16) depuis l'agencement de resserrage (302) jusqu'à l'article (14), le guide comprenant une surface de guidage (362) sur l'agencement de support (12), la surface de guidage (362) ayant une face incurvée destinée à solidariser l'élément allongé flexible (16).

6. Appareil de blocage selon l'une quelconque des revendications précédentes, dans lequel l'agencement de support (12) inclut un corps principal (22) et une partie de solidarisation de l'article (23) au niveau de laquelle l'agencement de support (12) peut solidariser l'article (14), la partie de solidarisation de l'article (23) ayant des première et deuxième parties de solidarisation (24, 26) s'étendant dans des directions opposées sur le corps principal (22), la partie de solidarisation de l'article (23) ayant un profil sensiblement en forme de V, une première partie du V comprenant la première partie de solidarisation, et une deuxième partie du V comprenant la deuxième partie de solidarisation.

7. Appareil de blocage selon l'une quelconque des revendications précédentes, dans lequel l'appareil inclut un moyen de désolidarisation (370) destiné à désolidariser l'élément de serrage (56) depuis la solidarisation avec l'élément allongé flexible (16), le moyen de désolidarisation (370) comprenant un outil ayant une partie d'insertion allongée (368), devant être insérée dans l'agencement de support (12) pour solidariser l'élément de serrage (56) et désolidariser l'élément de serrage (56) depuis la solidarisation avec l'élément allongé flexible (16), et l'agencement de support (12) définit une ouverture d'accès (366) pour donner accès à l'élément de serrage (56) par la partie d'insertion (368), la partie d'insertion (368) étant insérable dans l'ouverture d'accès (366) pour solidariser l'élément de serrage (56).

8. Appareil de blocage selon l'une quelconque des revendications précédentes, incluant un moyen de protection montable sur l'élément allongé flexible (16) pour apporter une protection à celui-ci, le moyen de protection comprenant un manchon compressible (404) sur l'élément allongé flexible (16), le manchon (404) étant compressé quand l'élément allongé flexible (16) est tiré à travers l'agencement de serrage (54).

9. Procédé de blocage d'un article (14), ledit procédé comprenant la fourniture d'un appareil de blocage (10) ayant un agencement de support (12), un premier agencement de coopération comprenant un agencement de serrage (54), et un deuxième agencement de coopération comprenant un agencement de resserrage (302), dans lequel le procédé comprend l'agencement d'un élément allongé flexible (16) en forme de fil, câble, filin, fil métallique ou toron, dans une position de blocage traversant l'article (14) entre les premier et deuxième agencements de coopération, le serrage de l'élément allongé flexible (16) au niveau de l'agencement de serrage (54), et la réalisation du resserrage de l'élément allongé flexible (16) contre l'article (14) avec l'agencement de resserrage (302), dans lequel l'agencement de serrage (54) définit un passage (60) pour l'élément allongé flexible (16), le passage (60) ayant des ouvertures opposées (31, 60A), et l'étape d'agencement de l'élément allongé flexible (16) dans la position de blocage comprend l'agencement de l'élément allongé flexible pour qu'il s'étende à travers le passage (60), et dans lequel l'agencement de serrage (54) inclut en outre un élément de serrage (56) et un moyen de poussée (58) destiné à pousser l'élément de serrage (56) en direction du passage (60), et l'étape de serrage de l'élément allongé flexible (16) comprend la poussée de l'élément de serrage (56) en direction du passage (60) pour solidariser l'élément allongé flexible (16) et serrer l'élément allongé flexible (16) dans le passage (60), **caractérisé en ce que** l'agencement de resserrage (302) comprend un ensemble pivot, et l'étape de resserrage de l'élément allongé flexible (16) inclut le déplacement de manière pivotante de l'agencement de resserrage (302) entre une position relâchée et une position resserrée.

10. Procédé selon la revendication 9, dans lequel l'ensemble pivot comprend un levier (303), et l'étape de déplacement de l'agencement de resserrage (302) entre la position relâchée et resserrée comprend le déplacement de manière pivotante du levier entre les positions relâchée et resserrée.

11. Procédé selon la revendication 9 ou 10, dans lequel l'étape de l'agencement de l'élément allongé flexible (16) dans la position de blocage comprend l'extension de l'élément allongé flexible (16) depuis le premier agencement de coopération vers le deuxième agencement de coopération pour apporter une partie de blocage de l'élément allongé flexible (16) s'étendant à travers l'article (14), et l'étape de resserrage de l'élément allongé flexible (16) comprend le déplacement de l'ensemble pivot dans une direction qui est globalement transversale à un plan défini par la partie de blocage.

12. Procédé selon la revendication 9, 10 ou 11, dans lequel l'agencement de serrage (54) inclut un moyen de poussée (58) destiné à pousser l'élément de serrage (56) en direction du passage (60), et l'étape d'agencement de l'élément allongé flexible (16) dans la position de blocage comprend l'insertion de l'élément allongé flexible (16) dans le passage (60), et le tirage de l'élément allongé flexible (16) de manière à ce que le moyen de poussée (58) puisse pousser l'élément de serrage (56) dans la direction de l'élément allongé flexible (16), moyennant quoi l'élément de serrage (56) solidarise l'élément allongé flexible (16) et serre l'élément allongé flexible (16) dans le passage (60).
